(19)

**Europäisches Patentamt**
**European Patent Office**
**Office européen des brevets**

(11) **EP 1 968 209 A1**

(12) **EUROPEAN PATENT APPLICATION**
published in accordance with Art. 158(3) EPC

(43) Date of publication:
**10.09.2008 Bulletin 2008/37**

(51) Int Cl.:
*H04B 7/06* (2006.01)    *H04B 1/707* (2006.01)
*H04B 7/02* (2006.01)    *H04B 7/26* (2006.01)
*H04J 11/00* (2006.01)

(21) Application number: **06822668.7**

(22) Date of filing: **31.10.2006**

(86) International application number:
**PCT/JP2006/321739**

(87) International publication number:
**WO 2007/052651 (10.05.2007 Gazette 2007/19)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **31.10.2005 JP 2005317268**

(71) Applicant: **Sharp Kabushiki Kaisha**
**Osaka-shi, Osaka 545-8522 (JP)**

(72) Inventors:
• **YOSHIMOTO, Takashi**
  **Midori-ku, Chiba-shi, Chiba-ken (JP)**
• **IMAMURA, Kimihiko**
  **Y104 Vancouver, WA 98684 (US)**

(74) Representative: **Brown, Kenneth Richard et al**
**R.G.C. Jenkins & Co.**
**26 Caxton Street**
**London SW1H 0RJ (GB)**

(54) **TRANSMITTER AND TRANSMISSION METHOD**

(57) A transmitter that transmits a signal from a plurality of transmission antennas, having a subcarrier allocating portion which changes a number of pilot channels per transmission signal band depending on whether or not a delay transmission diversity that transmits the signal by giving a delay between the plurality of transmission antennas is performed.

FIG. 7

EP 1 968 209 A1

**Description**

TECHNICAL FIELD

The present invention relates to a transmitter and a transmission method, and more particularly, to a transmitter and a transmission method for transmitting a signal wirelessly from a plurality of transmission antennas to a receiver.
Priority is claimed on Japanese Patent Application No. 2005-317268, filed October 31, 2005, the content of which is incorporated herein by reference.

BACKGROUND ART

In recent years, multi-carrier transmission has been proposed that uses delay transmit diversity (DTD) or cyclic delay transmit diversity (CDTD) that simultaneously performs transmission from a transmitter that is provided with a plurality of transmission antennas while giving a delay that differs for each transmission antenna (non-patent document 1).
According to the technology disclosed in non-patent document 1, a signal is transmitted from a transmitter that is, for example, provided with two different transmission antennas to a receiver. The receiver receives a combined wave of the signal that is transmitted respectively from the two transmission antennas of the transmitter with a reception antenna.

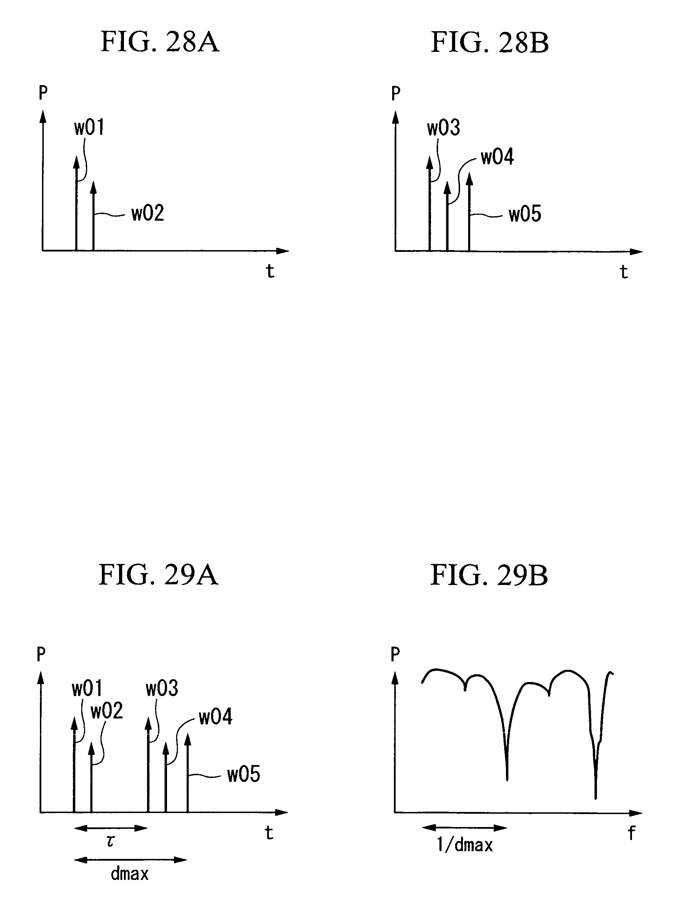

FIG. 28A shows a delay profile that is time domain representation of a propagation path between the transmission antenna and the reception antenna in the case where one of the transmission antennas among the two transmission antennas transmits a signal. The horizontal axis denotes time and the vertical axis denotes reception electrical power. As shown in FIG 28A, two signals w01, w02 are received by the receiver at different times. FIG. 28B is a drawing that shows a delay profile that is time domain representation of a propagation path between the transmission antenna and the reception antenna in the case where a signal is transmitted by one of the transmission antennas among the two transmission antennas. The horizontal axis denotes time and the vertical axis denotes reception electrical power. As shown in FIG 28B, three signals w03 to w05 are received at different times.
The transmission signal can be regarded as passing through a propagation path that combines the delay profiles shown in FIG. 28A and FIG. 28B, and reaching the reception antenna as shown in FIG 29A, in the case where the signal that is transmitted from the transmission antenna through the propagation path shown in FIG. 28B to the reception antenna is generated by delaying by τ a signal that is transmitted from the transmission antenna through the propagation path shown in FIG. 28A to the reception antenna. In other words, the transmission signal can be regarded as aforementioned in the case of employing the aforementioned DTD or CDTD between the one transmission antenna and the other transmission antenna, as shown in FIG. 29A. FIG. 29B is a frequency-domain representation of FIG. 29A. A reference character "dmax" denotes a maximum delay time.
It is possible to invariably strengthen the frequency selectivity of channels, by using the aforementioned transmission diversity method. It is therefore possible to obtain a frequency diversity effect and an excellent average bit error rate (BER) performance, in multi-carrier transmission such as the orthogonal frequency division multiplexing (OFDM) method.
Note that the difference between DTD and CDTD, as well as cyclic delay are disclosed in non-patent document 1 ("Application of Cyclic Delay Transmit Diversity to DS-CDMA using Frequency-domain Equalization", IEICE Technical Report, RCS2004-392, March 2005.).

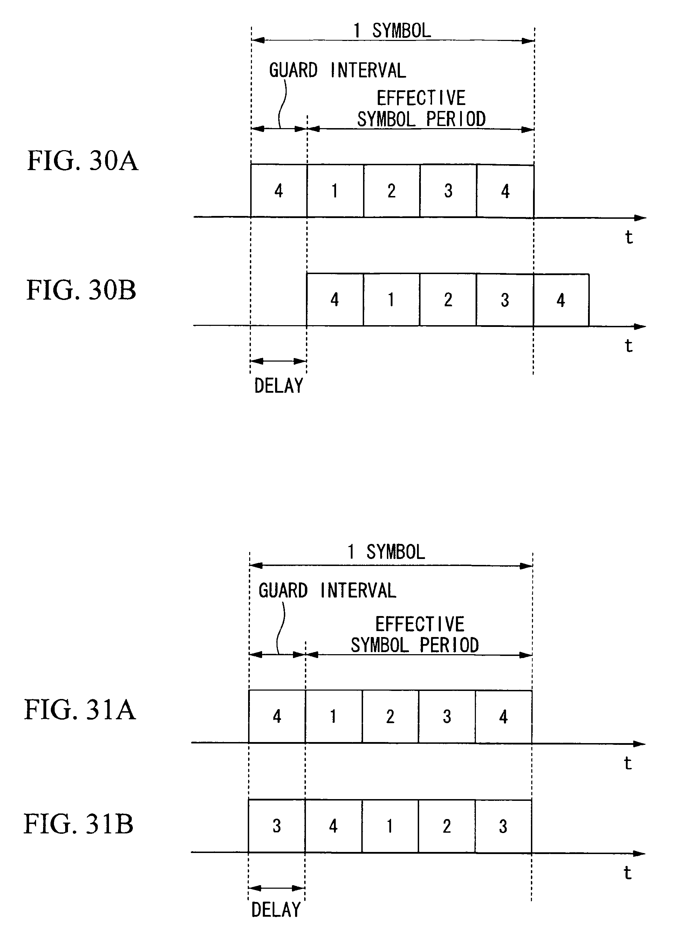

FIG. 30 shows one example of a signal in the case of applying DTD. FIG. 30A shows a signal that is transmitted from a first transmission antenna. FIG. 30B shows a signal that is transmitted from a second transmission antenna. Here, a delay with respect to the signal that is transmitted from the first transmission antenna is added to the signal that is transmitted from the second transmission antenna.
FIG 30A and FIG 30B show the case of an effective symbol period that is comprised of four samples, and a guard interval that is comprised of one sample. Here, in the second transmission antenna, a delay of 1 sample occurs compared to the first transmission antenna focusing on the effective symbol period.
FIG. 31 shows one example of a signal in the case of applying CDTD. FIG. 31A shows a signal that is transmitted from a first transmission antenna. FIG. 31B shows a signal that is transmitted from a second transmission antenna. Here, a cyclic delay is added to the signal that is transmitted from the second transmission antenna with respect to the signal that is transmitted from the first transmission antenna. FIG. 31A and FIG 31B show the case where an effective symbol period is comprised of four samples, and a guard interval is comprised of one sample. Here, in the second transmission antenna, a delay by 1 sample occurs compared to the first transmission antenna, focusing on the effective symbol period.
Note that in multicarrier transmission, a pilot channel signal that is a known signal is inserted at a known interval in a subcarrier as a reference signal for performing signal-to-interference plus noise ratio (SINR) estimation and channel estimation (see non-patent document 2 : 3GPP, R1-050853, "Common Pilot Channel Structure for OFDM Based Radio Access in Evolved UTRA Downlink").

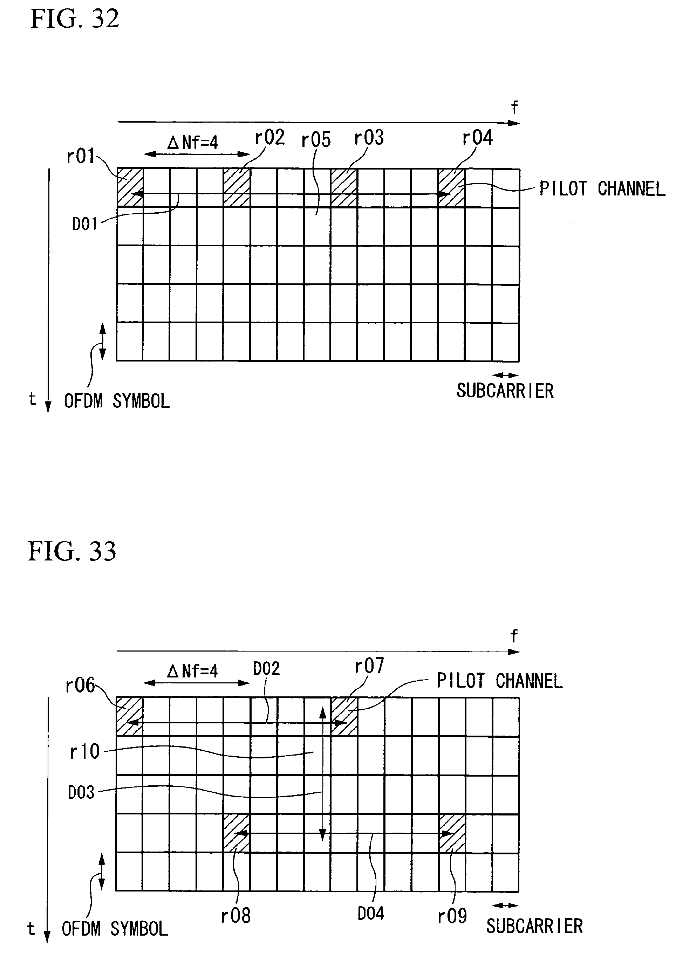

FIG. 32 and FIG. 33 are drawings that show pilot channels arranged in subcarriers, where the horizontal axis represents frequency f and the vertical axis represents time t. FIG 32 shows the case of inserting pilot channels at an equal interval of ΔNf of subcarriers in subcarriers within the same OFDM symbol. The pilot channels are arranged at the regions r01 to r04 in FIG. 32. Also, FIG. 33 shows the case of inserting pilot channels in regions r06 to r09 at an equal interval of ΔNf of subcarriers in subcarriers within different OFDM symbols.

In FIG. 32 and FIG. 33, it becomes possible to accurately estimate the propagation path in the case where propagation path estimation values in the subcarriers of the respective regions r05 and r10 are calculated. For example, the accurately estimation becomes possible by making an average value of the propagation path estimation values that are calculated from four pilot channels that are connected by the arrow D01 in FIG. 32 and the arrows D02 to D04 in FIG. 33.

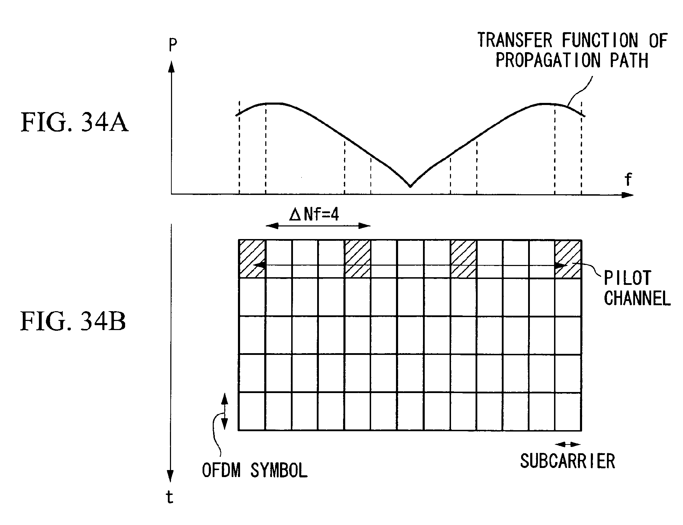

As described above it is possible to strengthen frequency selectivity, by applying transmission diversity such as CDTD in multicarrier transmission such as OFDM. It is therefore possible to obtain a good average BER performance by the frequency diversity effect. However, on the other hand, the difference in propagation paths of each pilot channel that is inserted into the subcarriers as shown in FIG. 34 increases, when the frequency selectivity of the reception signal is strong and the frequency fluctuation is intense. FIG. 34A shows the received signal represented by the frequency axis f on the horizontal axis and the power axis p on the vertical axis, and the received power of the received signal in the pilot channel greatly fluctuates. FIG. 34B shows the arrangement of the pilot channels shown in FIG. 32.

As described above, the received power of each pilot channel greatly differs, when the propagation path of the subcarrier in the vicinity of the pilot channels is estimated using the average of the propagation path estimation values that are calculated from the four pilot channels shown in FIG. 34B. The problem therefore arises that the propagation path estimation accuracy in degraded.

DISCLOSURE OF THE INVENTION

The present invention was achieved in view of the above circumstances, and has an object to provide a transmitter and transmission method in which a propagation path between the transmitter and a receiver can be accurately estimated even if frequency selectivity is strong.

The transmitter of the present invention was achieved to resolve the aforementioned issues, and is a transmitter that transmits a signal from a plurality of transmission antennas, having a subcarrier allocating portion which changes a number of pilot channels per transmission signal band depending on whether or not a delay transmit diversity for transmitting the signal by giving a delay between the plurality of transmission antennas is performed.

The subcarrier allocating portion of the transmitter of the present invention arranges more numbers of pilot channels transmission signal band in the case of performing delay transmit diversity, than in the case of not performing delay transmit diversity.

The subcarrier allocating portion of the transmitter of the present invention arranges more numbers of pilot channels per transmission signal band, in the case where a delay amount of the delay transmit diversity is greater than a predetermined threshold value.

The predetermined threshold value of the transmitter of the present invention is an inverse of a frequency band of a region that is defined by a predetermined time length and a predetermined frequency band.

The predetermined threshold value of the transmitter of the present invention is an inverse of a user occupied frequency band.

The subcarrier allocating portion of the transmitter of the present invention increases the number of pilot channels per transmission signal band as a delay amount of the delay transmit diversity increases.

The subcarrier allocating portion of the transmitter of the present invention arranges a pilot channels such that the inverse of a transmission antenna delay time becomes greater than a frequency bandwidth in which the pilot channel multiplied a series of orthogonal codes for estimationg a propagation path are arranged.

The subcarrier allocating portion of the transmitter of the present invention changes the number of pilot channels per transmission signal band by changing the arrangement interval of common pilot channels invariably inserted in the transmission signal band.

The subcarrier allocating portion of the transmitter of the present invention changes the number of pilot channels per transmission signal band by interpolating a dedicated pilot channel that is temporarily arranged to a pilot channel that is arranged in advance.

The transmitter of the present invention has a pilot signal generating portion which multiplies a code sequence for maintaining orthogonality along a common pilot channel and the dedicated pilot channel by the dedicated pilot channel that interpolates the pilot channel arranged in advance.

The pilot signal generating portion of the transmitter of the present invention multiplies a sequence in which an OVSF code that is multiplied by the common pilot channel is shifted by a cyclic shift, by the dedicated pilot channel.

The subcarrier allocating portion of the transmitter of the present invention increases a number of pilot channels that add a delay in accordance with a delay amount that is given between the plurality of transmission antennas.

The subcarrier allocating portion of the transmitter of the present invention adds the delay in accordance with the delay amount that is given between the plurality of transmission antennas, to a pilot channel that is arranged regardless of whether or not the delay transmit diversity is performed.

The transmitter of the present invention in which the pilot channel that is arranged regardless of whether or not the delay transmit diversity is performed is a common pilot channel that is invariably inserted in the transmission signal band.

The transmitter of the present invention in which the pilot channel that is arranged regardless of whether or not the delay transmit diversity is performed is comprised of a common pilot channel that is invariably inserted in the transmission signal band and a dedicated pilot channel that is temporarily arranged.

The subcarrier allocating portion of the transmitter of the present invention adds a dedicated pilot channel that is temporarily arranged to the pilot channel that is arranged regardless of whether or not the delay transmit diversity is performed.

A transmitter of the present invention is a transmitter that transmits a signal from a plurality of transmission antennas, having a subcarrier allocating portion which adds a delay to a dedicated pilot channel in the case of performing a delay transmit diversity that transmits a signal by giving a delay between the plurality of transmission antennas.

The subcarrier allocation portion of the transmitter of the present invention further adds a delay to a common pilot channel in the case of performing a delay transmit diversity that transmits a signal by giving a delay between the plurality of transmission antennas.

A transmission method of the present invention is a transmission method for transmitting a signal from a plurality of transmission antennas, having the step of changing a number of pilot channels per transmission signal band depending on whether or not a delay transmission diversity that transmits the signal by giving a delay between the plurality of transmission antennas is performed.

Effect of the Invention

In the present invention, the subcarrier allocating portion changes the number of pilot channels per transmission signal band depending on whether or not delay transmit diversity for transmitting the signals is performed by giving a delay among the plurality of transmission antennas.

BRIEF DESCRIPTION OF THE DRAWINGS

FIG. 1 is a drawing that shows a method of transmitting a signal from a transmitter that is provided with a plurality of transmission antennas to a receiver that is provided with a reception antenna.

FIG. 2A is a drawing that shows a delay profile in which a propagation path is expressed in the time domain between the transmission antenna that is provided on the transmitter and the reception antenna that is provided on the receiver.

FIG. 2B is a drawing that shows the delay profile in which the propagation path is expressed in the time domain between the transmission antenna that is provided on the transmitter and the reception antenna that is provided on the receiver.

FIG. 2C is a drawing that shows the delay profile in which the propagation path is expressed in the time domain between the transmission antenna that is provided on the transmitter and the reception antenna that is provided on the receiver.

FIG. 2D is a drawing that shows the delay profile in which the propagation path is expressed in the time domain between the transmission antenna that is provided on the transmitter and the reception antenna that is provided on the receiver.

FIG. 3A is a drawing that shows the reception signal, with the horizontal axis representing frequency f and the vertical axis representing the electrical power p.

FIG 3B is a drawing that shows an example of an arrangement of the common pilot channels in the case of not using CDTD.

FIG. 4A is a drawing that shows a received signal, with the frequency axis f on the horizontal axis and the power axis p on the vertical axis.

FIG. 4B is a drawing that shows the arrangement of the common pilot channels in the case of performing CDTD.

FIG. 5A is a drawing that shows a received signal, with the frequency axis f on the horizontal axis and the power axis p on the vertical axis.

FIG. 5B is a drawing that shows example of the case of arranging common pilot channels in different OFDM symbols.

FIG. 6A is a drawing that shows a received signal, with the frequency axis f on the horizontal axis and the power axis p on the vertical axis.

FIG. 6B is a drawing that shows example of the case of arranging common pilot channels in different OFDM symbols.

FIG. 7 is a block diagram that shows the constitution of the transmitter according to the first embodiment of the present invention.

FIG. 8 is a drawing that shows an example of the constitution of the signal that is transmitted by the transmitter.

FIG. 9A is a drawing that shows a received signal, with the frequency axis f on the horizontal axis and the power axis p on the vertical axis.

FIG. 9B is a drawing that shows the arrangement of the common pilot channels in the case where a transmitter transmitting a signal prearranged common pilot channels therein performs CDTD.

FIG. 10A is a drawing that shows the reception signal, with the horizontal axis representing frequency f and the vertical axis representing the electrical power p.

FIG. 10B is a drawing that shows a pilot channel arrangement in which a dedicated pilot channel is inserted between the common pilot channels disposed in advance, and is disposed in a different OFDM symbol, in the case of performing CDTD.

FIG. 11A is a drawing that shows the reception signal, with the horizontal axis representing frequency f and the vertical axis representing the electrical power p.

FIG. 11B is a drawing that shows an example of arrangement in which the dedicated pilot channel is inserted in the case of performing CDTD, in the case where the common pilot channels is arranged in advance at a different OFDM symbol.

FIG. 12 is a block diagram that shows the constitution of the transmitter according to the second embodiment of the present invention.

FIG. 13 is a drawing that shows an example of the constitution of a signal that a transmitter transmits.

FIG. 14 is a plan view that shows an example of the arrangement relation of a base station device and receivers.

FIG. 15A is a drawing that shows the constitution of the transmission signal to the receivers of a first OFDM symbol in which common pilot channels and dedicated pilot channels are arranged.

FIG 15B is a drawing that shows the constitution of the transmission signal to the receivers of a first OFDM symbol in which common pilot channels and dedicated pilot channels are arranged.

FIG 15C is a drawing that shows the constitution of the transmission signal to the receivers of a first OFDM symbol in which common pilot channels and dedicated pilot channels are arranged.

FIG. 16A is a drawing that shows a transmitter in the case where the transmitter applying CDTD and having n transmission antennas transmits a signal.

FIG. 16B is a drawing that shows a inter-antenna delay time in the case where the transmitter applying CDTD and having n transmission antennas transmits a signal.

FIG. 17 shows an example of a method of allocating users in a common data channel to a subcarrier.

FIG. 18 is a drawing for describing the case of allocating users in a common data channel to a subcarrier.

FIG. 19A is a drawing that shows the received signal with the frequency axis f on the horizontal axis and the power axis p on the vertical axis.

FIG. 19B is a drawing that shows the case of the pilot channels that are arranged in advance being common pilot channels.

FIG. 20A is a drawing that shows the delay profile in which the propagation path is expressed in the time domain.

FIG. 20B is a drawing that shows the delay profile in which the propagation path is expressed in the time domain.

FIG. 21A is a drawing that shows the reception signal, with the horizontal axis representing frequency f and the vertical axis representing the electrical power p.

FIG. 21B is a drawing that shows the constitution of a subcarrier that is transmitted from a transmitter to a receiver.

FIG. 22 is a block diagram that shows the constitution of the transmitter according to the third embodiment of the present invention.

FIG 23A is a drawing that shows a received signal, with the frequency axis f on the horizontal axis and the power axis p on the vertical axis.

FIG 23B is a drawing that shows the case of the pilot channels that are arranged in advance being common pilot channels.

FIG. 24A is a drawing that shows the reception signal, with the horizontal axis representing frequency f and the vertical axis representing the electrical power p.

FIG. 24B is a drawing that shows the arrangement pattern of pilot channels in the present embodiment.

FIG. 25A is a drawing that shows the reception signal, with the horizontal axis representing frequency f and the vertical axis representing the electrical power p.

FIG 25B is a drawing that shows the arrangement pattern of pilot channels in the present embodiment.

FIG. 26A is a drawing that shows a delay profile in which the propagation path is expressed in the time domain.

FIG. 26B is a drawing that shows a delay profile in which the propagation path is expressed in the time domain.

FIG. 26C is a drawing that shows a delay profile in which the propagation path is expressed in the time domain.

FIG. 27 is a block diagram that shows the constitution of the transmitter according to the fourth embodiment of the present invention.

FIG. 28A shows a delay profile that is time domain representation of a propagation path between the transmission antenna and the reception antenna in the case where one of the transmission antennas among the two transmission antennas transmits a signal.

FIG 28B shows a delay profile that is time domain representation of a propagation path between the transmission antenna and the reception antenna in the case where a signal is transmitted by one of the transmission antennas among the two transmission antennas.

FIG. 29A is a drawing that shows the delay profile of a signal that is transmitted from two transmission antennas.

FIG 29B is a frequency-domain representation of FIG. 29A.

FIG. 30A is a drawing that shows one example of a signal in the case of applying DTD.

FIG. 30B is a drawing that shows one example of a signal in the case of applying DTD.

FIG. 31A is a drawing that shows one example of a signal in the case of applying CDTD.

FIG. 31B is a drawing that shows one example of a signal in the case of applying CDTD.

FIG. 32 is a drawing that shows pilot channels arranged in subcarriers.

FIG. 33 is a drawing that shows pilot channels arranged in subcarriers.

FIG. 34A is a drawing for describing the problem of the related art.

FIG. 34B is a drawing for describing the problem of the related art.

BEST MODE FOR CARRYING OUT THE INVENTION

Hereinbelow, embodiments of the present invention will be described with reference to the attached drawings. In the present embodiment, the case of using CDTD will be described as a representative example of the delay transmit diversity for transmitting signals by giving a delay among the plurality of transmission antennas.

There are various channels depending on the role for pilot channels to be inserted in subcarriers for propagation path estimation. There has been proposed a downlink common pilot channel and a downlink dedicated pilot channel as pilot channels of physical channels, in Evolved UTRA and UTRAN that is being studied in the 3rd Generation Partnership Project,. A common pilot channel is a pilot channel that used in common for propagation path estimation in a plurality of receivers and is continually arranged. A dedicated pilot channel is a pilot channel that is used for propagation path estimation in a single receiver and is temporarily arranged.

In the embodiments below, the cases of using a common pilot channel and a dedicated pilot channel will be described.

The common pilot channel corresponds to a pilot channel CPICH (Common Pilot Channel) of Wideband Code Division Multiple Access (W-CDMA). The common pilot channel is used in estimation of a downlink propagation path state in Adaptive Modulation and Coding Scheme (AMCS), cell search, and propagation path loss measurement of uplink transmission power control.

The dedicated pilot channel is transmitted from a transmission antenna that has a propagation path (directionality) that differs from a cell common antenna such as an adaptive array antenna to a dedicated mobile station. The dedicated pilot channel is used for the purpose of reinforcement of the downlink common pilot channel for a mobile station with low reception quality. Note that physical channels of W-CDMA and High Speed Downlink Packet Access (HSDPA) of the abovementioned common pilot channel and dedicated pilot channel are disclosed in "W-CDMA Mobile Communication System," Keiji Tachikawa, ISBN4-621-04894-5.

First Embodiment

A first embodiment has the technology of changing the common pilot channel arrangement depending on whether or not cyclic delay transmit diversity (CDTD) is used.

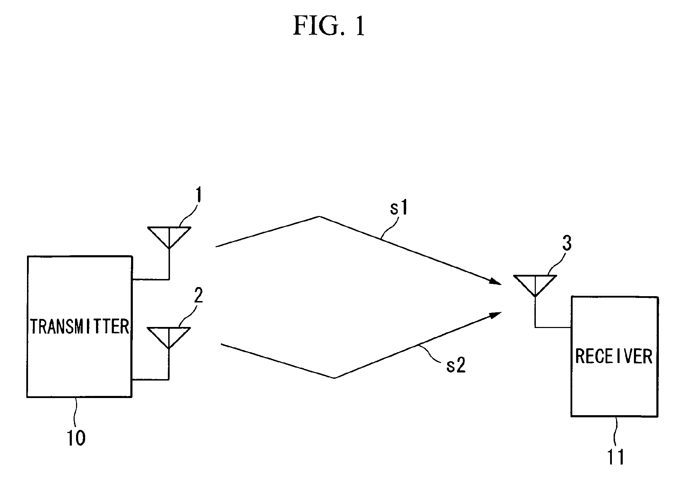

FIG. 1 is a drawing that shows a transmission method for a signal from a transmitter 10 that is provided with a plurality of transmission antennas 1, 2 to a receiver 11 that is provided with a reception antenna 3. As shown in FIG. 1, the transmitter 10 transmits signals s1 and s2 from the two transmission antennas 1, 2 that are provided. The receiver 11 receives the signals s1 and s2 by the single reception antenna 3 that is provided.

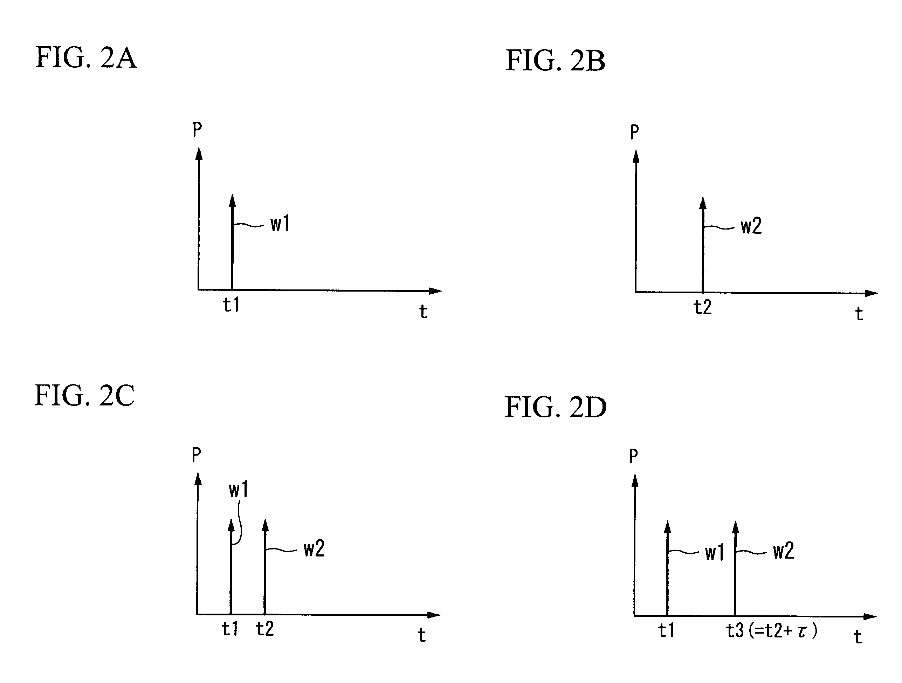

FIG 2A shows the delay profile in which the propagation path is expressed in the time domain between the transmission antenna 1 that is provided on the transmitter 10 (FIG. 1) and the reception antenna 3 that is provided on the receiver 11 (FIG. 1). As shown in FIG 2A, the reception antenna 3 receives a signal w1 at time t1 from the transmission antenna 1.

Also, FIG. 2B shows the delay profile in which the propagation path is expressed in the time domain between the transmission antenna 2 that is provided on the transmitter 10 and the reception antenna 3 that is provided on the receiver 11. As shown in FIG. 2B, the reception antenna 3 receives a signal w2 at time t2 from the transmission antenna 2.

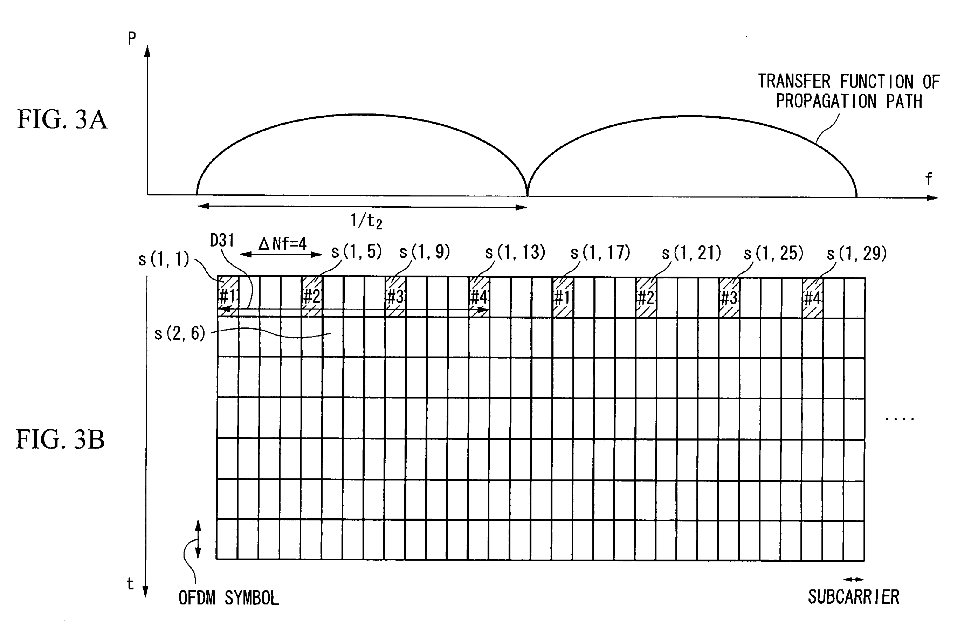

FIG. 3A shows the reception signal, with the horizontal axis representing frequency f and the vertical axis representing the electrical power p. FIG. 3B is a drawing that shows an example of an arrangement of the common pilot channels in the case of not using CDTD. In FIG. 3A, the horizontal axis represents frequency f, and the vertical axis represents time t. FIG. 3B describes the case in which the frequency f is divided into 31 subcarriers, and the time t is divided into 7 OFDM symbols. In the embodiment of the present invention, a region that is defined by a predetermined frequency band and a predetermined length of time is called a chunk. Also, a region that is defined by a basic frequency band (the frequency band of one subcarrier) and a basic length of time (the length of time in which one OFDM symbol is arranged) is called a unit region. A chunk is comprised of one or a plurality of unit regions. In the embodiment of the present invention, a region that is defined by a basic length of time at the $m^{th}$ line and a basic frequency band at the $n^{th}$ row is expressed as unit region s(m, n), in the case where the unit region s(1, 1) that is positioned in a region in which the frequency is the lowest and the time is the earliest serves as a reference,.

The unit regions s(1, 1), s(1, 5), s(1, 9), s(1, 13), s(1, 17), s(1, 21), s(1, 25), s(1, 29) show regions where the common pilot channels are arranged. That is, they are arranged at an interval of $\Delta Nf = 4$ in the direction of the frequency axis f and on the OFDM symbol of the same time. Also, an orthogonal variable spreading factor (OVSF) code, which is an orthogonal code, is multiplied along the frequency axis f direction. The series of orthogonal codes #1 to #4 indicate constituent elements when SF = 4 of the OVSF code sequence CSF.m (m = 1,2, ..., SF, where SF is the code length) that is multiplied by the pilot channels as shown in Equation (1) described below. For example, when SF = 4, C4. 1 = (1, 1, 1, 1), C4. 2 = (1, 1, -1, -1), C4. 3 = (1, -1, 1, -1), and C4. 4 = (1, -1, -1, 1). A different OVSF code sequence is multiplied by the pilot channels at every cell or every sector or every transmission antenna and used for distinguishing cells, sectors, and transmission antennas. This is the same for other embodiments described later.

$$CSF. \, m = (\#1, \#2, \ldots, \#SF) \qquad\qquad (1)$$

The common pilot channel arrangement interval $\Delta Nf = 4$ in FIG. 3B is one example, and is suitably determined by the radio system that is applied. The transmitter 10 (FIG. 1) simultaneously transmits signals in which common pilot channels shown in FIG. 3B are arranged as shown from the transmission antenna 1 (FIG. 1) and the transmission antenna 2 (FIG 1). This means that the delay time is $\tau = 0$ between the transmission antenna 1 and the transmission antenna 2.

The receiver 11 receives the signals arranged as shown in FIG 3B from the transmitter 10 through the propagation path of the delay profile shown in FIG. 2C by the reception antenna 3 that it is equipped with. That is, the receiver 11 receives the signals w1, w2 at the times t1, t2 from the transmitter 10. Note that in FIG. 3A, the propagation path expresses the propagation path of FIG. 2C in the frequency-domain, the horizontal axis is the frequency axis f, and the vertical axis is the power axis p of the received power.

On the reception side, the propagation path is estimated, by performing a reverse diffusion processing by the OVSF code that is multiplied with respect to the common pilot channels that are inserted in the subcarriers of the reception signal. For example, the propagation path estimation result of the unit region s(2, 6) of FIG. 3B is obtained from the result of performing reverse diffusion processing in the common pilot channels #1 to #4 that are connected by the arrow D31 in FIG. 3B. Alternatively, it is possible to adopt the amplitude (or received power) and phase of the subcarriers in which the pilot channels of the received signal are arranged as one that shows the propagation path value. However, in the receiver, the pilot channel arrangement, the pilot channels, the OVSF code to be multiplied, and the pilot number used for calculating the propagation path value are known.

FIG. 3B shows the arrangement of common pilot channels in the case of transmitting signals simultaneously from the two transmission antennas when CDTD is not performed. The case of transmitting a signal from only one transmission antenna is identical.

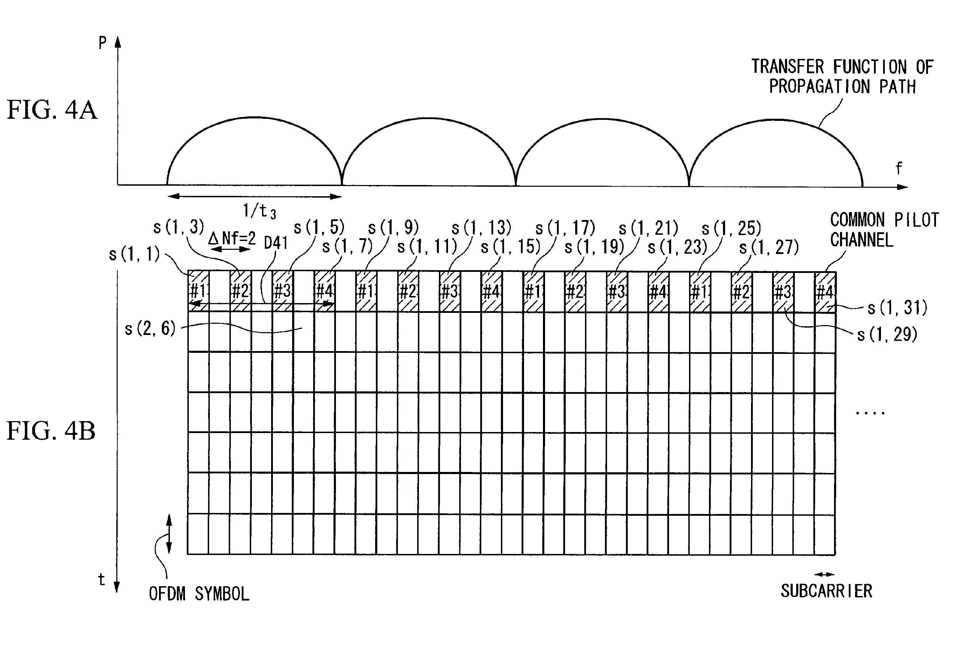

FIG. 4A shows a received signal, with the frequency axis f on the horizontal axis and the power axis p on the vertical axis. FIG 4B shows the arrangement of the common pilot channels in the case of performing CDTD. In FIG. 4B, the unit regions s(1, 1), s(1, 3), s(1, 5), s(1, 7), s(1, 9), s(1, 11), s(1, 13), s(1, 15), s(1, 17), s(1, 19), s(1, 21), s(1, 23), s(1, 25), s(1, 27), s(1, 29), s(1, 31) show regions where common pilot channels are arranged. As shown in FIG. 4B, in the case of performing CDTD, the subcarrier interval $\Delta Nf$ between common pilot channels is smaller than the case of not performing CDTD.

In FIG. 4B, arrangement is performed in the same OFDM symbol at the subcarrier interval of $\Delta Nf=2$ in the frequency axis f direction. Also, the common pilot channels are multiplied by the OVSF code of code length SF = 4 along the frequency axis f direction. In FIG. 4B, #1 to #4 indicate the constituent elements of the OVSF code sequence.

The transmitter transmits a signal in which the common pilot channels are arranged as shown in FIG. 4B while giving the delay $\tau$ from the antenna 1 (FIG. 1) to the antenna 2 (FIG. 1). FIG. 2D shows a delay profile of the propagation path expressed in the time domain that the reception antenna 3 (FIG. 1) has received. As shown in FIG. 2D, the receiver 11 receives the signals w1, w2 at the times t1, t3 (= t2 + τ) from the transmitter 10. Note that the propagation path in FIG. 4A is one that expresses the propagation path of FIG. 2D in the frequency domain.

On the reception side, reverse diffusion processing is performed by the multiplied OVSF code with respect to the common pilot channels that are inserted in the subcarriers of the reception signal to estimate the propagation path. For example, the propagation path estimation result of the unit region s(2, 6) of FIG. 4B is obtained from the result of performing reverse diffusion processing in the common pilot channels # 1 to #4 that are connected by the arrow D41.

Also, it is possible to adopt the amplitude (or received power) and phase of the subcarriers in which the pilot channels of the received signal are arranged as one that shows the propagation path value. However, in the receiver, the pilot channel arrangement, the pilot channels, the OVSF code to be multiplied, and the pilot number used for calculating the propagation path value are known.

In FIG. 4B, the common pilot channels are arranged at an equal interval by ΔNf, but are not limited to that arrangement. In the case of performing CDTD, as one example, the arrangement in which the interval of the common pilot channels are smaller than the case of not performing CDTD is adoptable.

As described above, it is possible to reduce the difference of frequency fluctuations between common pilot channels that are used in propagation path estimation, in the case of performing CDTD, by reducing the arrangement interval ΔNf in the frequency axis f direction between common pilot channels of the same OFDM symbol with respect to the case of not performing CDTD.

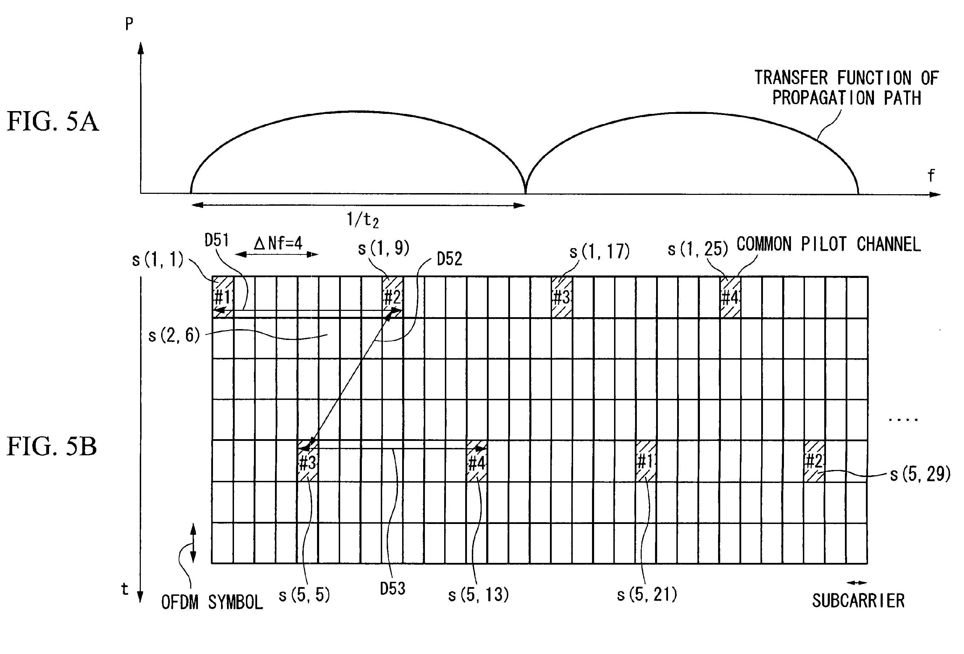

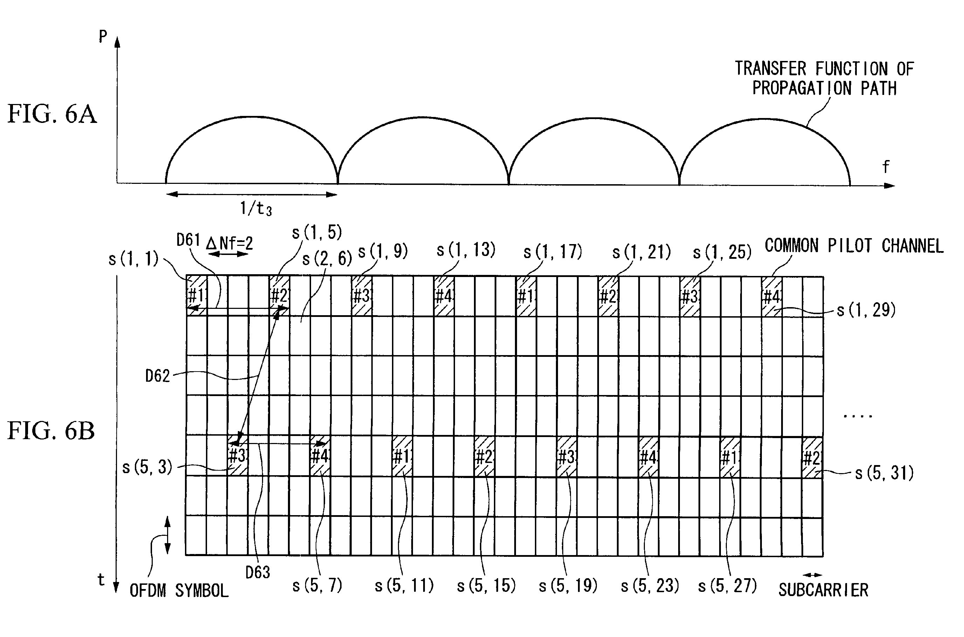

FIG. 5A and FIG. 6A show a received signal, represented by the frequency axis f on the horizontal axis and the power axis p on the vertical axis. FIG. 5B and FIG. 6B show examples of the case of arranging common pilot channels in different OFDM symbols. FIG. 5B is the arrangement of common pilot channels in the case of not performing CDTD, while FIG. 6B is the arrangement of common pilot channels in the case of performing CDTD. In the case of performing CDTD of FIG. 6B, the subcarrier interval ΔNf with the adjacent common pilot channel is narrowed from ΔNf = 4 to ΔNf = 2 in the case of not performing CDTD.

The receiver can calculate the propagation path estimation value of the unit region s(2, 6) by performing reverse diffusion processing with the four common pilot channels #1 to #4 that are connected by the arrows D51 to D53 as shown in FIG. 5B. Also, the receiver can calculate the propagation path estimation value of the unit region s(2, 6) by performing reverse diffusion processing with the four common pilot channels #1 to #4 that are connected by the arrows D61 to D63 as shown in FIG. 6B.

Also, in FIG. 5B and FIG. 6B, the OVSF code sequence #1 to #4 in turn along the frequency axis f direction is multiplied by the common pilot channels. The common pilot channels are arranged in the first line OFDM symbol (the unit regions s(1, 1) to s(1, 31)). An OVSF code sequence that is 2-bit cyclic shifted from the OVSF code sequence that is multiplied at the first line OFDM symbol along the frequency direction is multiplied by the common pilot channels. The common pilot channels are arranged in the fifth line OFDM symbol (unit regions s(5, 1) to s(5, 31) that is transmitted after the first line OFDM symbol. The multiplication order of the OVSF code sequences is not limited thereto, and need only be an order that can retain the orthogonality with another OVSF code sequence by performing reverse diffusion processing.

As described above, it is possible to reduce the difference of frequency fluctuations between common pilot channels that are used in propagation path estimation, in the case of performing CDTD, by reducing the arrangement interval ΔNf in the frequency axis f direction between common pilot channels of a different OFDM symbol with respect to the case of not performing CDTD.

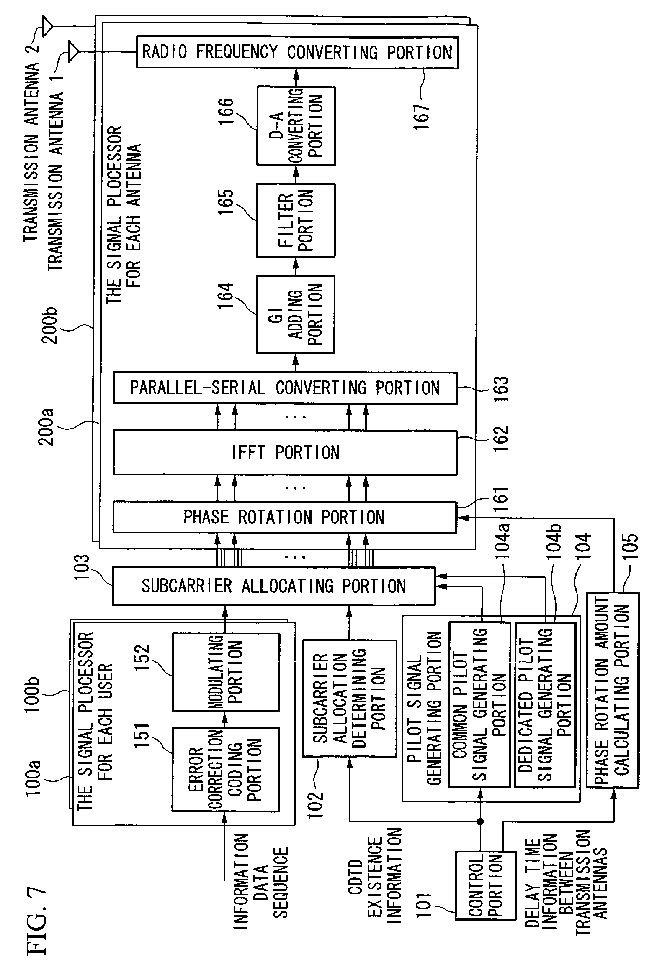

FIG 7 is a block diagram that shows the constitution of the transmitter according to the first embodiment of the present invention. This transmitter has signal processors for each user 100a, 100b that perform signal processing for each user. Also, this transmitter has a control portion 101 that outputs CDTD existence information and delay time information between transmission antennas. Also, this transmitter has a subcarrier allocation determining portion 102. The subcarrier allocation determining portion 102 determines the subcarrier insertion arrangement of common pilot channels by the CDTD existence information that is reported from the control portion 101. Also, the subcarrier allocation determining portion 102 determines the allocation to each subcarrier of the dedicated pilot channels and the output of the signal processors for each user 100a, 100b.

Also, this transmitter has a pilot signal generating portion 104 that generates common pilot channels and dedicated pilot channels that are multiplied by the OVSF code sequence and inputs them to a subcarrier allocating portion 103.

Also, this transmitter has a phase rotation amount calculating portion 105 that calculates the phase rotation amount of each subcarrier by delay time information between transmission antennas from the control portion 101. Also, this transmitter has a subcarrier allocating portion 103 that allocates to each subcarrier the output of the signal processors for each user 100a, 100b and the output of the pilot signal generating portion 104 based on the subcarrier allocation information in the subcarrier allocation determining portion 102. Also, this transmitter has signal processors for each antenna 200a, 200b that perform signal processing of each transmission antenna.

The pilot signal generating portion 104 is comprised of a common pilot signal generating portion 104a that generates common pilot channel signals of a pattern that is determined by the CDTD existence information that is output from the control portion, and a dedicated pilot signal generating portion 104b that generates signals that assist the common pilot signals. Note that the dedicated pilot signal generating portion 104 inserts for assisting the common pilot channels in uses that correspond to time fluctuations of signals that depend on movement speed of the transmitter or receiver or frequency fluctuations of the signal due to phasing.

The signal processor for each user 100a has an error correction coding portion 151 that performs error correction coding of information data sequences that are transmission data. Also, it has a modulating portion 152 that performs modulation processing such as Quadrature Phase Shift Keying (QPSK) and Quadrature Amplitude Modulation (16QAM) in correspondence with the output of the error correction coding portion 151. Also, since the signal processor for each user 100b has the same constitution as the signal processor for each user 100a, a description thereof will be omitted.

The output of the signal processors for each user 100a, 100b is allocated to a suitable subcarrier in the subcarrier allocating portion 103 that allocates to a suitable subcarrier based on "subcarrier allocation information" that is reported by the subcarrier allocation determining portion 102. After that, the output of the signal processors for each user 100a, 100b is output to the signal processors for each antenna 200a, 200b. Also, at this time, the subcarrier allocating portion 103 assumes the role of allocating the output of the pilot signal generating portion 104 to the positions (chunks) of the common pilot channels and dedicated pilot channels that are determined by the subcarrier allocation determining portion 102.

The signal processor for each antenna 200a inputs the output of the subcarrier allocating portion 103 to the phase rotation portion 161, performs phase rotation for each subcarrier, and outputs to an inverse fast Fourier transform (IFFT) portion 162. The signal processor for each antenna 200a has a serial-parallel converting portion 163 that performs serial-parallel conversion of the output of the IFFT portion 162. Also, it has a guard interval (GI) appending portion 164 that appends a guard interval to the output of the serial-parallel converting portion 163. Also, it has a filter portion 165 that removes only the signals of the desires band from the output of the GI adding portion 164. Also, it has a digital-analog (D-A) converting portion 166 that performs digital-analog conversion of the output of the filter portion 165. Note that the signal processor for each antenna 200b has the same constitution as the signal processor for each antenna 200a. The outputs of the signal processors for each antenna 200a, 200b pass through a radio frequency converting portion 167 that performs frequency conversion to radio frequencies, are output to the transmission antenna 1 and the transmission antenna 2, and are transmitted to a receiver as radio signals.

Note that the phase rotation $\theta m$ in the case of appending the phase rotation with the phase rotation portion 161 assumes $\theta m = 2\pi fm \cdot (n - 1)T$. Here, $fm$ is the frequency interval of the 0th subcarrier and the mth subcarrier, and is expressed as $fm = m/Ts$. Also, $Ts$ shows the symbol length (time) of the OFDM symbol, and $(n-1)T$ indicates the magnitude of the cyclic delay time in the transmission antenna n with respect to the transmission antenna 1.

FIG. 7 shows the case of two users and two transmission antennas, but the number of user and number of transmission antennas is not limited thereto. Also, it is possible to apply this embodiment to the case where a signal with a specific scramble code that is determined by each transmission antenna, each sector, and each base station is transmitted by each transmission antenna.

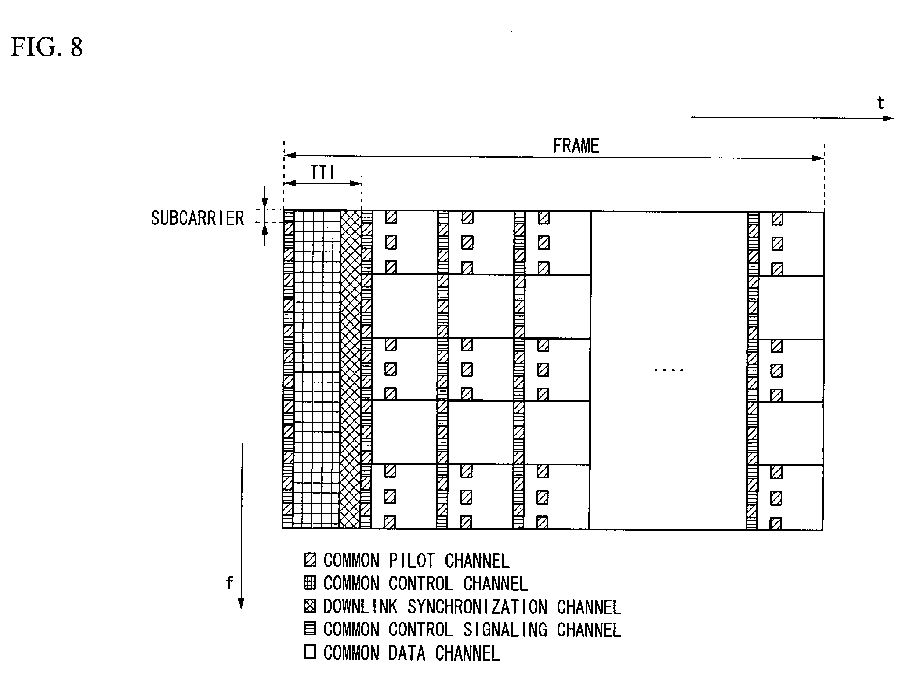

FIG. 8 is a drawing that shows an example of the constitution of the signal that is transmitted by the transmitter. In Evolved UTRA and UTRN that are being studied in the 3rd Generation Partnership Project (3GPP), the other main physical channels that are being proposed besides the downlink common pilot channel and the downlink dedicated pilot channel include the downlink synchronization channel, the downlink common control channel, and the downlink shared control channel (DSCH).

The DSCH corresponds to synchronization channel SCH of W-CDMA. The DSCH is used in mobile station cell search, OFDM signal radio frames, time slots, transmission timing intervals, and OFDM symbol timing synchronization.

The common control channel DCCCH includes common control information, such as broadcast information (corresponding to broadcast channel BCH) that corresponds to the first common control physical channel P-CCPCH, the second common control physical channel S-CCPCH, and the paging indicator channel PICH of W-CDMA, packet paging indicator PI information (corresponding to the paging indicator channel PICH) that indicates the existence of a packet call, packet paging information that responds to the packet call (corresponding to the paging channel PCH), and downlink access information (corresponding to the downlink access channel FACH).

The Downlink Shared Control Signaling Channel (DSCSCH) corresponds to the HS-DSCH-related shared control channel HS-SCCH, the downlink Dedicated Physical Control Channel (DPCCH), and the Acquisition Indicator Channel (AICH) that are included in the HSDPA-system High-Speed Physical Downlink Shared Channels (HS-PDSCH). The DSCSCH is shared by a plurality of mobile stations. The DSCSCH is used for transmission of the information necessary for demodulation of High Speed Downlink Shared Channels (HS-DSCH) with each mobile station (modulation type, diffusion code, etc), the information necessary for error correction demodulation processing and Hybrid Automatic Repeat Request (HARQ) processing, and the scheduling information of the radio resources (frequency, time).

The Downlink Shared Data Channel (DSDCH) corresponds to the High Speed Downlink Shared Channel (HS-DSCH) and the Downlink Dedicated Physical Data Channel (DPDCH) that are included in the High-Speed Physical Downlink Shared Channel (HS-PDSCH) of the High-Speed Downlink Packet Access (HSDPA) system. The DSDCH is used for transmission of the packet data from the upper layer to the mobile stations.

As shown in FIG. 8, after transmitting the common control channel symbols, common data channel symbols in which are stored the information data of each user are transmitted. The common data channel symbols have the constitution of common pilot channels being disposed as shown in FIG. 3B, FIG. 4B, FIG 5B and FIG. 6B. The arrangement information of common data channel symbols is stored in the common control channel symbols.

In the receiver, when the signal with the constitution shown in FIG. 8 is received, first, the arrangement information of common data channel symbols is obtained by the common control channel symbols. Next, in accordance with the arrangement information, propagation path estimation of each subcarrier of the common data channel symbol is performed using the common pilot channel of the common data channel symbol. However, in the common control channel symbol, known common pilot channels are inserted in a predetermined arrangement, and the propagation path estimation is performed by those common pilot channels.

As described above, in the case of performing CDTD, it possible to reduce the difference in frequency fluctuation of each pilot channel used in propagation path estimation, and possible to perform highly accurate propagation path estimation, as one example, by increasing the number of common pilot channels per transmission signal band with respect to the case of not performing CDTD. Also, it is possible to perform CDTD favorably.

Second Embodiment

A second embodiment is directed to a method of interpolating dedicated pilot channels to pilot channels that are prearranged depending on the existence of CDTD, that is, whether CDTD is performed or not performed.

Similarly to the first embodiment, the description will be given for the case, as shown in FIG. 1, of the transmitter transmitting a signal with its two transmission antennas. The receiver receiving signals with its one reception antenna. Also, similarly to the first embodiment, FIG. 2A shows the delay profile in which the propagation path is expressed in the time domain between the transmission antenna 1 that is provided on the transmitter and the reception antenna 3 that is provided on the receiver. By the same token, FIG. 2B shows the delay profile in which the propagation path is expressed in the time domain between the transmission antenna 2 that is provided on the transmitter and the reception antenna that is provided on the receiver.

First, in the transmitter that applies CDTD, the arrangement of pilot channels is determined in advance by the method of the system or the like. As an example, the case of the prearranged pilot channels being arranged with common pilot channels as shown in FIG. 3B will be explained.

The transmitter simultaneously transmits signals in which common pilot channels shown in FIG. 3B from the transmission antenna 1 and the transmission antenna 2 (FIG. 1). This means that the delay time is $\tau = 0$ between the transmission antenna 1 and the transmission antenna 2.

The receiver receives the signals disposed as shown in FIG. 3B from the transmitter through the propagation path of the delay profile shown in FIG. 2C by the reception antenna that it is equipped with. Note that the propagation path of FIG. 3A expresses in the frequency-domain the propagation path of FIG. 2C.

On the reception side, reverse diffusion processing is performed by the OVSF code that is multiplied with respect to the common pilot channels that are inserted in the subcarriers of the reception signal and the propagation path is estimated.

For example, the propagation path estimation result of the unit region s(2, 6) of FIG. 3B is obtained, as described in the first embodiment, from the result of performing reverse diffusion processing in the common pilot channels #1 to #4 that are connected by the arrow D31 in FIG. 3B. Alternatively, it is possible to adopt the amplitude (or received power) and phase of the subcarriers in which the pilot channels of the received signal are arranged as one that shows the propagation path value. However, in the receiver, the pilot channel arrangement, the pilot channels, the OVSF code to be multiplied, and the pilot number used for calculating the propagation path value are known.

FIG. 3B shows the arrangement of common pilot channels in the case of transmitting signals simultaneously from the two transmission antennas when CDTD is not performed. The case of transmitting a signal from only one transmission antenna is identical.

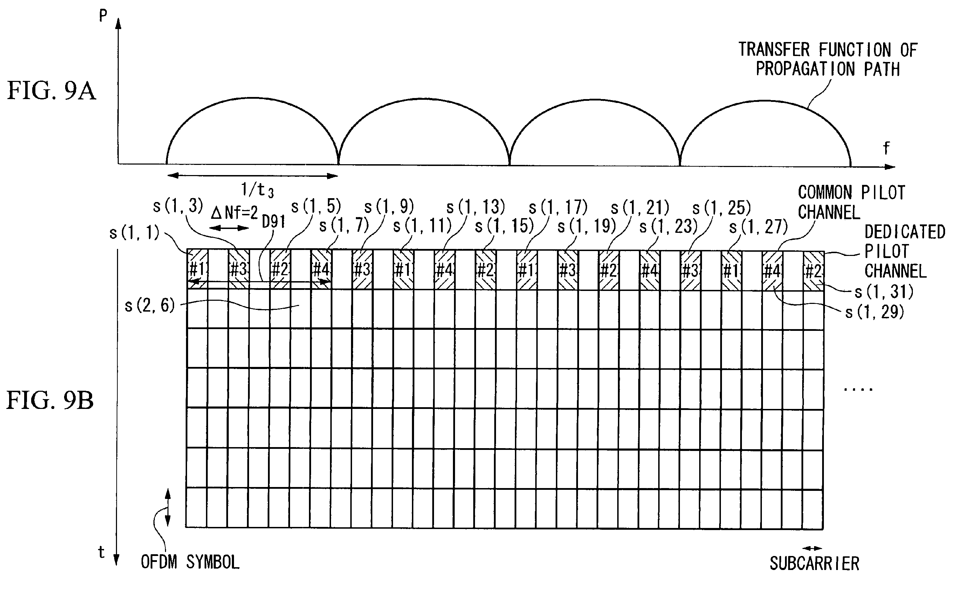

FIG. 9A shows a received signal, with the frequency axis f on the horizontal axis and the power axis p on the vertical axis. FIG. 9B shows the arrangement of the common pilot channels in the case of performing CDTD in a transmitter that transmits signals with common pilot channels prearranged as shown in FIG. 3B.

As shown in FIG. 9B, in the case of performing CDTD, on the frequency axis f, dedicated pilot channels are disposed between the common pilot channels that are arranged at the unit regions s(1, 1), s(1, 5), s(1, 9), s(1, 13), s(1, 17), s(1, 21), s(1, 25), s(1, 29), that is, at the unit regions s(1, 3), s(1, 7), s(1, 11), s(1, 15), s(1, 19), s(1, 23), s(1, 27), s(1, 31). A sequence that 2-bit cyclic shifts the same OVSF code sequence as for the common pilot channels is multiplied by the aforementioned dedicated pilot channels. The #1 to #4 of FIG 9B indicate OVSF code sequences.

The transmitter transmits a signal in which the common pilot channels and dedicated pilot channels are arranged as shown in FIG. 9B while the antenna 2 gives the delay τ to the antenna 1. FIG 2D shows a delay profile in which the propagation path, expressed in the time domain, is received by the reception antenna. The propagation path of FIG. 9A is one that expresses in the frequency domain the propagation path of FIG. 2D.

On the reception side, a reverse diffusion processing is performed to estimate the propagation path, by the OVSF code that is multiplied with respect to the common pilot channels and the dedicated pilot channels that are inserted in the subcarriers of the reception signal.

For example, the propagation path estimation result of the subcarrier of the channel s(2, 6) in FIG 9B is obtained from the result of performing reverse diffusion processing in the common pilot channels and dedicated channels #1 to #4 that are connected by the arrow D91 of FIG. 9B.

Also, it is possible to adopt the amplitude (or received power) and phase of the subcarriers in which the pilot channels of the received signal are arranged as one that shows the propagation path value. However, in the receiver, the pilot channel arrangement, the pilot channels, the OVSF code to be multiplied, and the pilot number used for calculating the propagation path value are known.

In FIG. 9B, the common pilot channels and the dedicated pilot channels are arranged by being inserted at an equal interval by ΔNf, but not limited thereto. In the case of performing CDTD, as one example, the interval of the pilot channels may be smaller than the case of not performing CDTD.

As described above, in the case of performing CDTD, with respect to the case of not performing CDTD, it is possible to reduce the arrangement interval ΔNf in the frequency direction between common pilot channels that are used in propagation path estimation by interpolating the pilot channels that are prearranged with the dedicated pilot channels that are arranged in the same OFDM symbol. It is therefore possible to reduce the difference of frequency fluctuations between common pilot channels that are used in propagation path estimation.

Also, it is possible to maintain the orthogonality with another OVSF code sequence, by multiplying the code sequence that cyclic shifts the OVSF code sequence that is multiplied by the common pilot channels by the dedicated pilot channels, even when performing propagation path estimation using the common pilot channels and dedicated pilot channels.

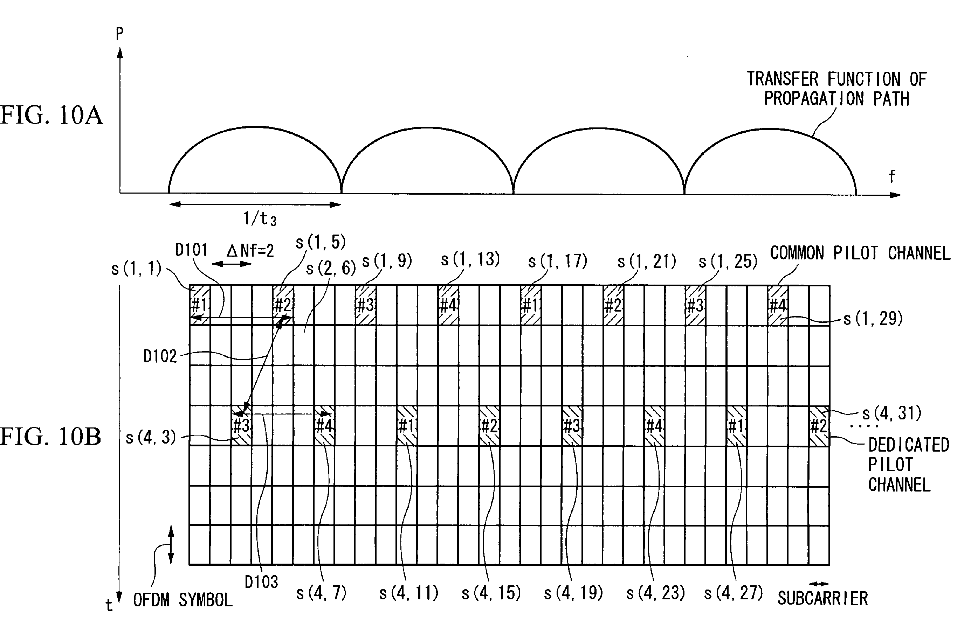

FIG. 10A shows the reception signal, with the horizontal axis representing frequency f and the vertical axis representing the electrical power p. FIG. 10B shows the case of inserting dedicated pilot channels in an OFDM symbol with a different time between the common pilot channels disposed in advance at the unit regions s(1, 1), s(1, 5), s(1, 9), s(1, 13), s(1, 17), s(1, 21), s(1, 25), s(1, 29), that is, at the unit regions s(4, 3), s(4, 7), s(4, 11), s(4, 15), s(4, 19), s(4, 23), s(4, 27), s(4, 31) in the case of performing CDTD.

As shown in FIG. 10B, in the case of performing CDTD, dedicated pilot channels are placed at subcarriers between common pilot channels that are arranged in advance in the frequency axis f direction, and in an OFDM with a different time.

Similarly to FIG. 9B, a sequence that 2-bit cyclic shifts the same OVSF code sequence as for the common pilot channel is multiplied by the aforementioned dedicated pilot channel. The #1 to #4 of FIG. 10B indicate constituent elements of the OVSF code sequence.

The receiver that receives the signal in which the pilot channels shown in FIG. 10B are disposed can calculate the propagation path estimation value of, for example, the unit region s(2, 6) by performing reverse diffusion with #1 to #4 of the four common pilot channels and dedicated pilot channels that are connected by the arrows D101 1 to D103.

It is possible to accurately estimate propagation paths on the receiver side, by utilizing the dedicated pilot channels mentioned above. Also, it is possible to estimate with additional accuracy the propagation paths on the receiver side, by utilizing common pilot channels in addition to dedicated pilot channels.

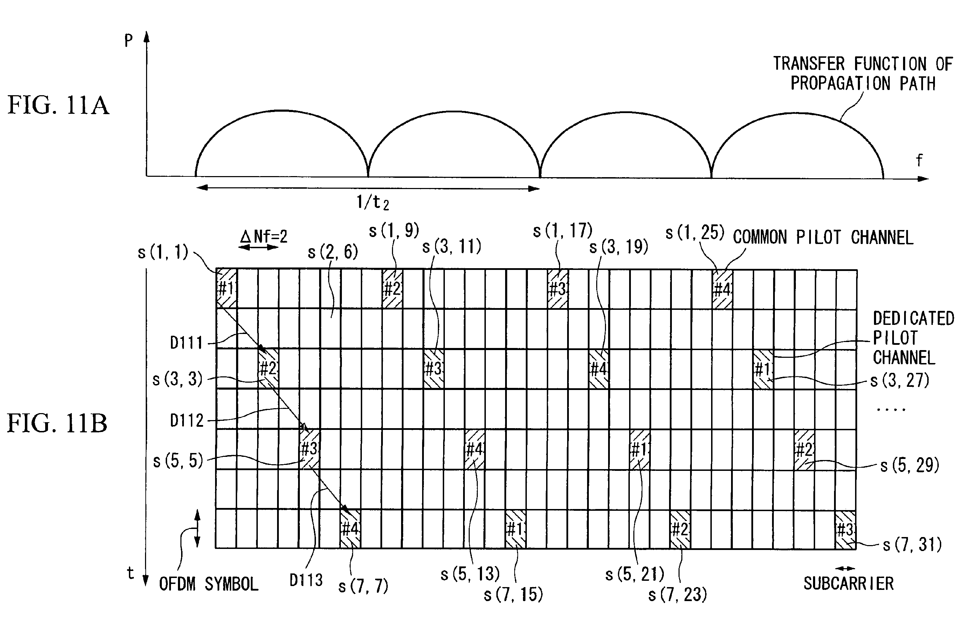

FIG. 11A shows the reception signal, with the horizontal axis representing frequency f and the vertical axis representing the electrical power p. FIG. 11B shows the arrangement row of inserting dedicated pilot channels in the case of performing CDTD when common pilot channels are arranged in advance at a different OFDM symbol. In FIG. 11B, common pilot channels are arranged at the unit regions s(1, 1), s(1, 9), s(1, 17), s(1, 25), s(5, 5), s(5, 13), s(5, 21), s(5, 29). Also, dedicated pilot channels are arranged at unit regions s(3, 3), s(3, 11), s(3, 19), s(3, 27), s(7, 7), s(7, 15), s(7, 23), s(7, 31). #1 to #4 indicate the constituent elements of OVSF code sequence that is multiplied by each pilot channel.

In FIG. 11B, common pilot signals are arranged at the OFDM symbol of the first line (s(1, 1) to s(1, 31)) and the OFDM symbol of the fifth line (s(5, 1) to s(5, 31)). In FIG 11B, the OVSF code sequence that is 2-bit cyclic shifted from the OVSF code sequence that is multiplied by the common pilot channels that are arranged at the OFDM symbol of the first line is multiplied by the common pilot channels that are arranged in the OFDM symbol of the fifth line, similarly to FIG. 5B.

The dedicated pilot channels are inserted between adjacent common pilot channels along different OFDM symbols in a direction of the frequent axis f, and the subcarrier interval ΔNf with the adjacent pilot channel is narrowed from ΔNf = 4 to ΔNf = 2 in the case of not performing CDTD. Also, the dedicated pilot channels are arranged in a direction of the time axis t on the third-line OFDM symbol (s(3, 1) to s(3, 31)) between the common pilot channels that are arranged at the first-line OFDM symbol and the common pilot channels that are arranged at the fifth-line OFDM symbol, and the seventh-line OFDM symbol (s(7, 1) to s(7, 31)) that is transmitted after the fifth-line OFDM symbol. Moreover, the OVSF code sequence that is 1-bit cyclic shifted from the OVSF code sequence that is multiplied by the common pilot channels that are arranged at the OFDM symbol of the first line is multiplied by the dedicated pilot channels that are arranged at the third-line OFDM symbol, and the OVSF code sequence that is 1-bit cyclic shifted from the OVSF code sequence that is multiplied by the common pilot channels that are arranged at the OFDM symbol of the fifth line is multiplied by the dedicated pilot channels that are arranged at the seventh-line OFDM symbol.

The receiver that receives the signal in which the pilot channels shown in FIG. 11B are disposed can calculate the propagation path estimation value of, for example, the unit region s(2, 6) by performing reverse diffusion with #1 to #4 of the four common pilot channels and dedicated pilot channels that are connected by the arrows D111 to D113.

Also, in FIG. 9B, FIG. 10B and FIG. 11B, a sequence that bit cyclic shifts the same OVSF code sequence as for the common pilot channels is multiplied by the dedicated pilot channels, however, the multiplication sequence is not limited thereto, and by performing reverse diffusion processing, it may be an arrangement that can maintain the orthogonality with another OVSF code sequence.

As described above, in the case of performing CDTD, with respect to the case of not performing CDTD, it is possible to reduce the arrangement interval ΔNf in the frequency direction between pilot channels that are used in propagation path estimation by interpolating the pilot channels that are prearranged with the dedicated pilot channels that are arranged at different OFDM symbols. It is therefore possible to reduce the difference of frequency fluctuations between pilot channels that are used in propagation path estimation.

Also, it is possible to maintain the orthogonality with another OVSF code sequence, by multiplying the code sequence that cyclic shifts the OVSF code sequence that is multiplied by the common pilot channels by the dedicated pilot channels, even when performing propagation path estimation using the common pilot channels and dedicated pilot channels.

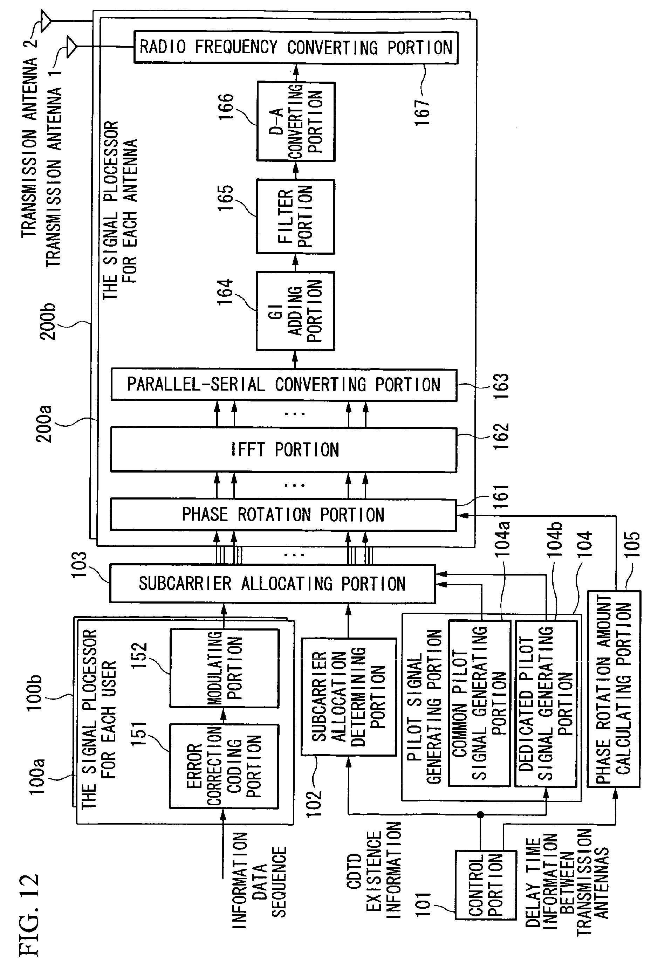

FIG. 12 is a block diagram that shows the constitution of the transmitter according to the second embodiment of the present invention. The transmitter according to the present embodiment has a control portion 101 that outputs CDTD existence information and delay time information between transmission antennas. Also, The transmitter has a subcarrier allocation determining portion 102. The subcarrier allocation determining portion 102 determines the subcarrier insertion arrangement of dedicated pilot channels by the CDTD existence information that is reported from the control portion 101. The subcarrier allocation determining portion 102 determines the allocation to each subcarrier of the common pilot channels and the output of signal processors for each user 100a, 100b. Also, the transmitter has a pilot signal generating portion 104 that generates common pilot channels and dedicated pilot channels that multiply the OVSF code sequence and input them to a subcarrier allocating portion 103. Also, the transmitter has a phase rotation amount calculating portion 105 that calculates the phase rotation amount of each subcarrier by delay time information between transmission antennas from the control portion 101. Also, the transmitter has a subcarrier allocating portion 103. The subcarrier allocating portion 103 allocates to each subcarrier the output of the signal processors for each user 100a, 100b and the output of the pilot signal generating portion 104 based on the subcarrier allocation information in the subcarrier allocation determining portion 102. Also, the transmitter has signal processors for each antenna 200a, 200b that perform signal processing of each transmission antenna. The pilot signal generating portion 104 has a dedicated pilot signal generating portion 104b that generates dedicated pilot channel signals of a pattern that is determined by the CDTD existence information that is output from the control portion 101, and a common pilot signal generating portion 104a that generates common pilot channel signals of a pattern that is determined in advance by the method of the system.

The other constitutions are the same as the constitution of the transmitter according to the first embodiment (FIG. 7), and so will be identified by the same reference numerals with descriptions thereof omitted.

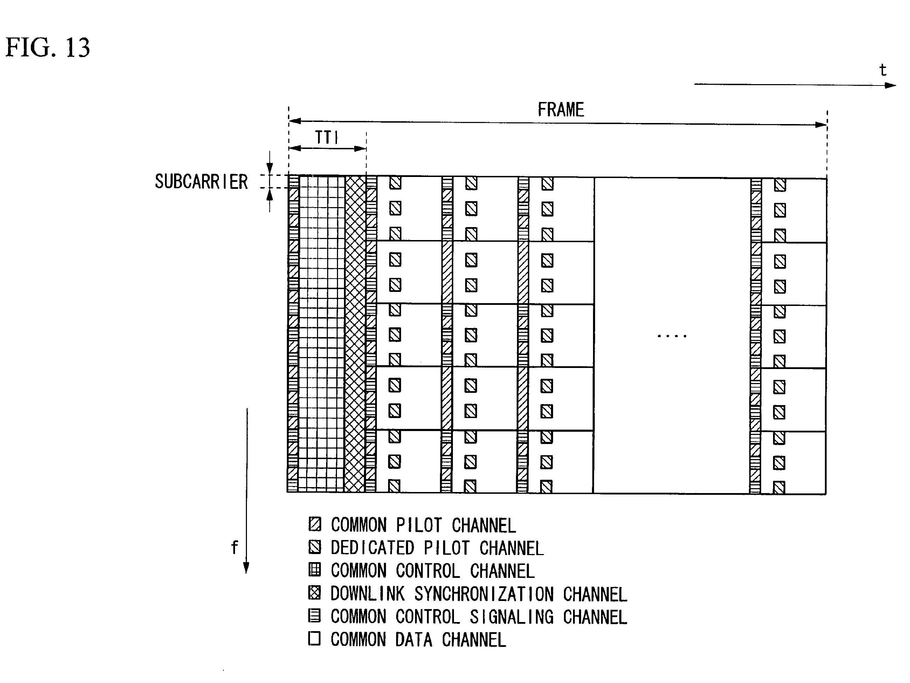

FIG. 13 is a drawing that shows an example of the constitution of a signal that a transmitter transmits. In FIG. 13, the role of each channel is the same as that described in the first embodiment. As shown in FIG 13, after transmitting the common control channel symbols, common data channel symbols in which are stored the information data of each user are transmitted. In the common data channel symbols are disposed common pilot channels and dedicated pilot channels as shown in FIG. 9B, FIG. 19B, and FIG. 11B. The arrangement information of common data channel symbols is stored in the common control channel. The arrangement information of the dedicated pilot channels is stored in the common control signaling channel.

In the receiver, when the signal shown in FIG. 13 is received, first, the arrangement information of common data channel symbols is obtained by the common control channel symbols. At this time, the arrangement information of the common pilot channels is obtained.

Next, propagation path estimation is performed using the common pilot channel of the common data channel symbol, in accordance with the aforementioned common pilot arrangement information.

Next, propagation path estimation of the common control signaling channel is performed by the aforementioned propagation path estimation value, a demodulation process is performed, and the dedicated pilot channel information that is stored in the common control signaling channel is obtained.

Finally, propagation path estimation of the subcarriers to which the user information data is allocated is performed using the common pilot channels and dedicated pilot channels, in accordance with the arrangement information of the common pilot channels and dedicated pilot channels that are obtained by the above procedure.

However, in the common control channel symbol, known common pilot channels are inserted in a predetermined arrangement, and the propagation path estimation is performed by those common pilot channels.

Also, dedicated pilot channels are arranged at the same subcarriers and the same OFDM symbols at the sectors that belong to the aforementioned base station device, in the case of applying CDTD to a base station device, and as shown above, applying a method of interpolating common pilot channels that are arranged in advance with dedicated pilot channels in the case of applying CDTD.

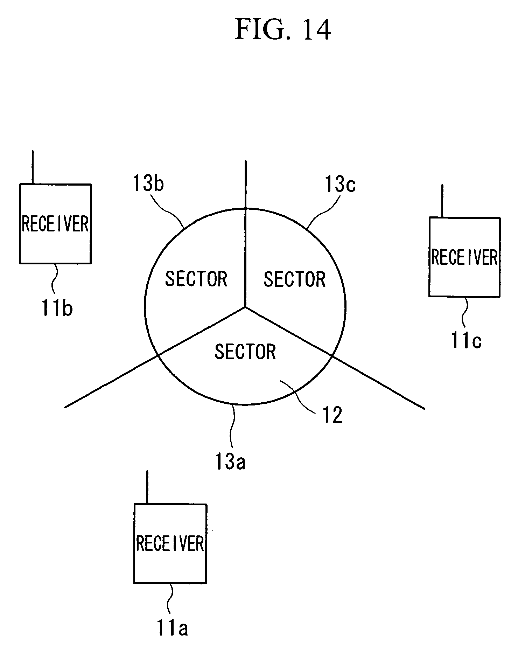

FIG. 14 shows an example of the arrangement relation of the base station device and the receivers. As shown in FIG 14, the base station device 12 has three sectors of sector 13a to sector 13c, and transmits signals to receiver 11a with sector 13a, to receiver 11b with sector 13b, and receiver 11c with sector 13c. Here, the case of performing CDTD for transmission to from the base station device 12 to the receiver 11s will be described. Besides, synchronization between the sectors will be assumed. Also, an OVSF code of a sequence that differs for each sector is multiplied by the common pilot channels and the dedicated pilot channels.

First, the base station device 12 transmits a signal with the common pilot channel arrangement shown in FIG. 3B to each of the receiver 11a to receiver 11c.

Next, in the case of the base station device 12 performing CDTD with respect to the receiver 11a, transmission is performed with the arrangement shown by FIG. 9B that interpolates the common pilot channels with the dedicated pilot channels.

At this time, even for the signals transmitted to the receiver 11b of the sector 13b and the receiver 11c of the sector 13c, the signals are transmitted with the dedicated pilot channel arrangement shown in FIG. 9B.

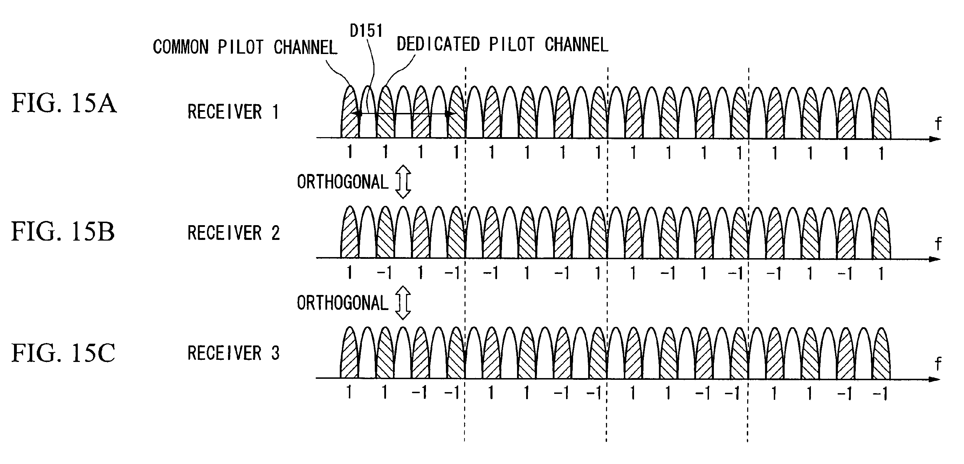

FIGS. 15A to 15C are drawings that show the constitution of the transmission signal to the receiver 11a to receiver 11c (FIG. 14), being the first-line OFDM symbol in which the common pilot channels and the dedicated pilot channels shown in FIG. 9B are disposed. In the OVSF code C4. m = (#1, #2, #3, #4) that is multiplied by the common pilot channels and the dedicated pilot channels, the OVSF code of C4.1 = (1, 1, 1, 1) is multiplied as shown in FIG. 15A by the sector 13a. Also, as shown in FIG. 15B, the OVSF code of C4.2 = (1, 1, -1, -1) is multiplied by the sector 13b. Also, the OVSF code of C4.3 = (1, -1, 1, -1) is multiplied by the sector 13c.

In the receiver 11a that is performing CDTD, for example, it is possible to perform a high degree of accuracy since the orthogonality with the receiver 11b and the receiver 11c is maintained, in the case of calculating the propagation path estimation value of the unit region s(2, 6) of FIG. 9B, by performing reverse diffusion processing using the common pilot channels and dedicated pilot channels that are connected by the arrow D151 in FIG. 15.

Alternatively, in the signals transmitted to the receiver 11b of the sector 13b and the receiver 11c of the sector 13c, it is possible to maintain the orthogonality with the receiver 11b and the receiver 11c, by allocating a null signal to the subcarrier in which dedicated pilot channels of the transmission signal to the receiver 11a are arranged.

In the second embodiment onward, in the case of interpolating the common pilot channels that are arranged in advance with the dedicated pilot channels, the pilot arrangement method described in FIG. 14 and FIG. 15 is similarly applied.

As described above, in the case of performing CDTD, in the frequency axis f direction, it is possible to reduce the difference of frequency fluctuations of each pilot channel that is used in propagation path estimation, by inserting dedicated pilot channels between the common pilot channels that are prearranged and increasing the number of pilot channels per frequency band of the transmission signal. It therefore becomes possible so highly accurate propagation path estimation.

In the above explanation, it is possible to increase the number of pilot channels per transmission signal band, by interpolating between the common pilot channels with the dedicated pilot channels in the case of performing CDTD. However, it is possible to increase the number of pilot channels per transmission signal band, by combining the methods that reduce the interval of common pilot channels described in the first embodiment.

In the first and second embodiments described above, the subcarrier allocating portion 103 changes the number of pilot channels per transmission signal band by CDTD existence information that reports whether or not delay transmit diversity for transmitting the signals is performed by giving a delay among the plurality of transmission antennas. Thereby, in accordance with whether or not delay transmit diversity is performed, it is possible to change the propagation path estimation accuracy, by changing the number of pilot channels per transmission signal band with the subcarrier allocating portion 103.

Also, in the aforementioned first and second embodiments, with the subcarrier allocating portion 103, in the case of performing delay transmit diversity, a greater number of pilot channels per transmission signal band may be arranged compared to the case of not performing delay transmit diversity. Thereby, in the case of performing delay transmit diversity, it is possible to enhance the propagation path estimation accuracy during transmission that has employed delay transmit diversity, since a greater number of pilot channels are allocated to the transmission signal with the subcarrier allocating portion 103.

Also, in the second embodiment, by interpolating dedicated pilot channels to pilot channels that are prearranged with the subcarrier allocating portion 103, the number of pilot channels per transmission signal band is changed. Thereby, it is possible to make the propagation path estimation accuracy higher than the case of performing propagation path estimation employing only the prearranged pilot channels, and so possible to increase the transmission quality between the transmitter and receiver. Also, it is possible to favorably perform CDTD.

Third Embodiment

A Third embodiment is directed to a method of interpolating dedicated pilot channels to pilot channels that are prearranged as one example in the case of, in CDTD, changing the pilot channel interval by a comparison result of a delay time that is given between transmission antennas and a threshold value that is determined by a system that applies CDTD.

Here, in a transmitter that applies CDTD, the case will be described of setting a threshold value $\alpha$ that switches the arrangement of pilot channels that are determined by the method of the radio transmission system. With respect to this threshold value $\alpha$, in the case of making the inter-antenna delay time $\tau$ smaller than the threshold value $\alpha$, it inserts pilot channels at an arrangement that is determined in advance by a method of the system or the like, and in the case of the inter-antenna delay time $\tau$ being greater than the threshold value $\alpha$, it interpolates the pilot channels by dedicated pilot channels at an arrangement that is determined in advance by a method of the system or the like.

The aforementioned inter-antenna delay time $\tau$ is the delay time with the transmission antenna that gives the maximum delay with respect to the reference transmission antenna in the case of a plurality of transmission antennas.

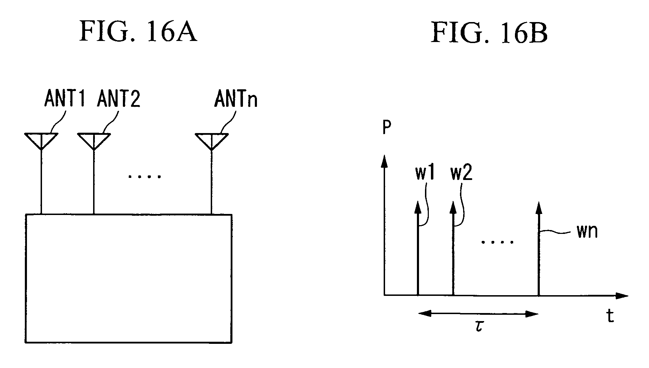

In the case of transmitting a signal by applying CDTD with a transmitter that has n antennas ANT1, ANT2, ..., ANTn as shown in FIG. 16A, the aforementioned inter-antenna delay time $\tau$ is shown in FIG. 16B. Reference characters w1, w2, ..., wn denote the respective arrival waves of the signals that are transmitted from the transmission antennas ANT1, ANT2, ..., ANTn.

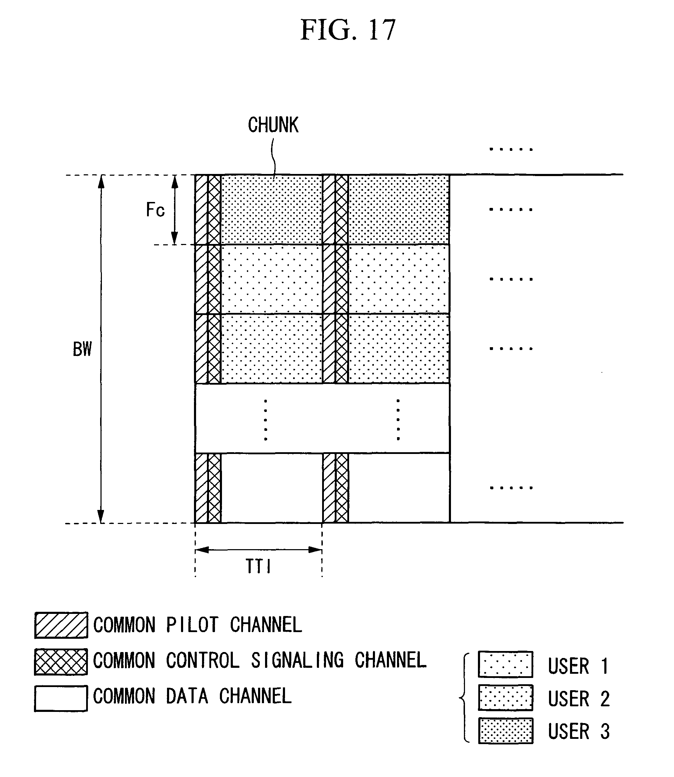

Next, the example of setting the threshold value $\alpha$ will be shown. In the transmitter that applies CDTD, FIG. 17 shows an example of a method of allocating users in a common data channel to a subcarrier. As shown in FIG. 17, the users 1, 2, 3 of the common data channel are allocated in units of segment Fc that bring together subcarriers in the frequency axis f direction, and in the time axis t direction, are allocated in units (chunks) that are called TTI that bring together a plurality of OFDM symbols. The BW of FIG. 17 is the transmission frequency bandwidth that is used in the sending of transmission frames. Note that the start of a chunk is allocated to common pilot channels and common control signal channels.

Also, in a transmitter that applies CDTD, there are cases in which a user wants to obtain a frequency diversity effect and times when a user wants to obtain a user diversity effect. In the user allocation shown in FIG. 17, the frequency region of wanting to obtain this frequency diversity effect and a frequency region of wanting to obtain a user diversity effect are switched in chunk units. In this case, in a chunk of wanting to obtain the user diversity effect, in that frequency region, it is preferred that the frequency fluctuations are small, and so the CDTD delay time $\tau$ is set small. In a chunk of wanting to obtain a frequency diversity effect, in that frequency region, it is preferred that the frequency fluctuations are large, and so the CDTD delay time $\tau$ is set large.

From the above, with regard to the threshold value $\alpha$ of switching the pilot arrangement, letting the chunk frequency band be Fc, then $\alpha = 1/Fc$. In the case of the inter-antenna delay time $\tau$ being smaller than the threshold value $\alpha$, it inserts pilot channels at the arrangement that is determined in advance by a method of the system or the like. In the case of the inter-antenna delay time $\tau$ being greater than the threshold value $\alpha$, it interpolates the pilot channels with dedicated pilot channels at an arrangement that is determined in advance by a method of the system or the like.

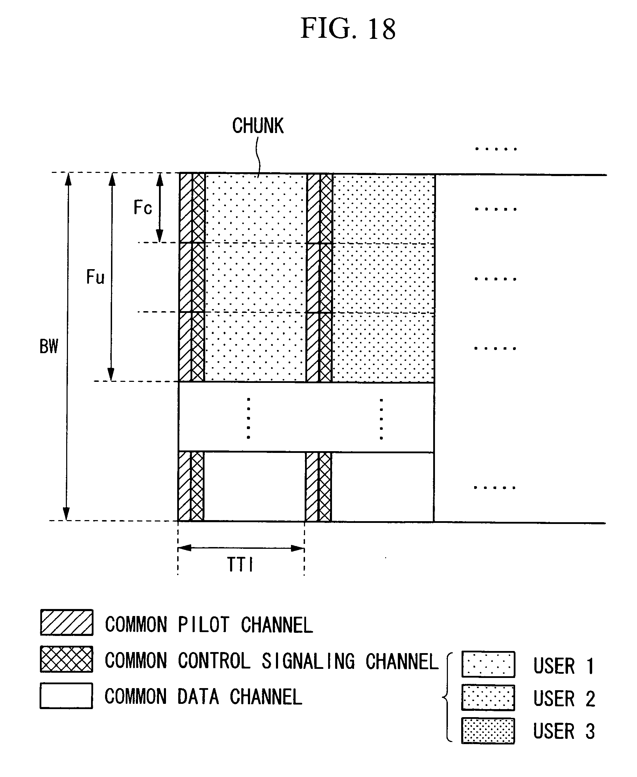

As an example of another method of setting the threshold value $\alpha$, the case of allocating users to subcarriers with a common data channel as shown in FIG. 18 will be described.

As shown in FIG. 18, a user of the common data channel is allocated along a plurality of chunks in the frequency axis f direction. In FIG. 18, users 1, 2, 3 are allocated along three chunks. In the time axis t direction, they are allocated in TTI units that sum up a plurality of OFDM symbols.

Also, in a transmitter that applies CDTD, there are cases in which a user wants to obtain a frequency diversity effect and times when a user wants to obtain a user diversity effect. In the user allocation shown in FIG. 18, the frequency region of wanting to obtain this frequency diversity effect and a frequency region of wanting to obtain a user diversity effect are switched in user units. In this case, for a user that wants to obtain the user diversity effect, in the frequency region of that user that is allocated across a plurality of chunks, it is preferred that the frequency fluctuations are small, and so the CDTD delay time $\tau$ is set small. For a user that wants to obtain the frequency diversity effect, in the frequency region of that user that is allocated across a plurality of chunks, it is preferred that the frequency fluctuations are large, and so the CDTD delay time $\tau$ is set large.

From the above, with regard to the threshold value $\alpha$ of switching the pilot arrangement, letting the frequency bandwidth of the user that is allocated across a plurality of chunks be Fu, then $\alpha$ = 1/Fu. In the case of the inter-antenna delay time $\tau$ being smaller than the threshold value $\alpha$, it inserts pilot channels at the arrangement that is determined in advance by a method of the system or the like. In the case of the inter-antenna delay time $\tau$ being greater than the threshold value $\alpha$, it interpolates the pilot channels with dedicated pilot channels at an arrangement that is determined in advance by a method of the system or the like.

A specific example of the third embodiment is the same as the first and second embodiments, and as shown in FIG. 1, the transmitter transmits a signal with its two transmission antennas, and the transmitter will be described in the case of receiving signals with its one reception antenna. Regarding allocation of users in the common data channel to subcarriers, a description will be given for the case of FIG. 17.

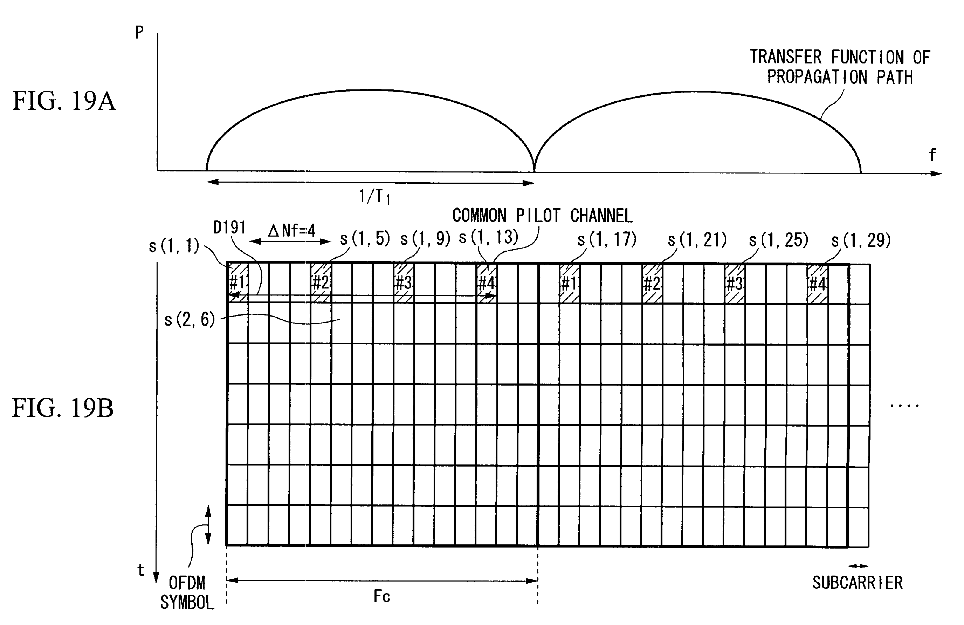

First, in the transmitter that applies CDTD, the arrangement of pilot channels is determined in advance by the method of that radio system or the like. As an example, the case of the prearranged pilot channels being arranged by common pilot channels as shown in FIG. 19B will be explained. Note that FIG. 19A shows the received signal represented by the frequency axis f on the horizontal axis and the power axis p on the vertical axis.

In FIG. 19B, common pilot channels are disposed at the unit regions s(1, 1), s(1, 5), s(1, 9), s(1, 13), s(1, 17), s(1, 21), s(1, 25), s(1, 29). Also, these common pilot channels are arranged at the same OFDM symbol (here, the first-line OFDM symbol) at the interval of ΔNf=4 in the frequency axis f direction. Also, the OVSF code of code length SF = 4 is multiplied along the frequency axis f direction by the common pilot channels. In FIG. 19B, #1 to #4 indicate the constituent elements of the OVSF code sequence, similarly to the description of the first embodiment. Also, the number of subcarriers of one chunk is assumed to be 15, and in the case of the frequency bandwidth of one chunk being Fc, then the threshold value $\alpha$ is such that $\alpha$ = 1/Fu.

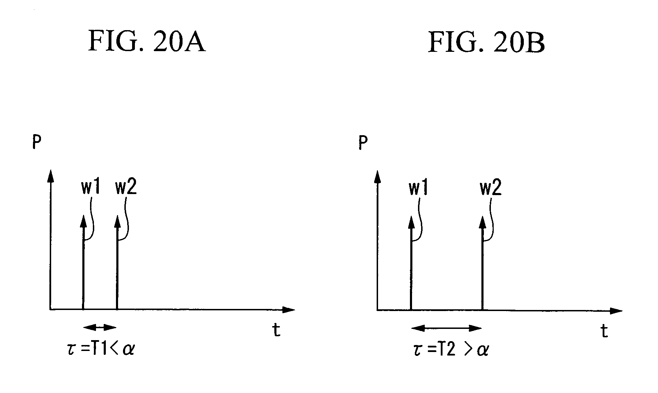

The transmitter transmits by giving the delay time $\tau$ = T1 to the transmission antenna 1 and the transmission antenna 2. FIG. 20A shows the delay profile in which the propagation path is expressed in the time domain at this time. In FIG. 20A, w1 is a signal that is output from the transmission antenna 1, and w2 is a signal that is output from the transmission antenna 2. The propagation path of FIG. 19A expresses in the frequency-domain the propagation path of FIG. 20A. As shown in FIG. 19B, $\alpha$ = 1/Fc > T1, and in the case of performing transmission by giving the delay time $\tau$ = T1 to the transmission antenna 1 and the transmission antenna 2, the transmitter transmits signals in which the common pilot channels that are allocated in advance are arranged.

The receiver receives the signals disposed as shown in FIG. 19B from the transmitter through the propagation path of the delay profile shown in FIG. 20A by the reception antenna that it is equipped with. Note that the propagation path of FIG. 19A is one that expresses in the frequency-domain the propagation path of FIG. 20A.

On the reception side, reverse diffusion processing is performed by the OVSF code that is multiplied with respect to the common pilot channels that are inserted in the subcarriers of the reception signal and the propagation path is estimated.

For example, the propagation path estimation result of the unit region s(2, 6) of FIG. 19B is obtained from the result of performing reverse diffusion processing in the common pilot channels #1 to #4 that are connected by the arrow D 191 in FIG. 19B. Alternatively, it is possible to adopt the amplitude (or received power) and phase of the subcarriers in which the pilot channels of the received signal are arranged as one that shows the propagation path value. However, in the receiver, the pilot channel arrangement, the pilot channels, the OVSF code to be multiplied, and the pilot number used for calculating the propagation path value are known.

The transmitter transmits signals by giving the delay time $\tau$ = T2 to the transmission antenna 1 and the transmission antenna 2.

FIG. 20B shows the delay profile in which the propagation path is expressed in the time domain at this time.

In FIG. 20B, w1 is a signal that is output from the transmission antenna 1, and w2 is a signal that is output from the transmission antenna 2.

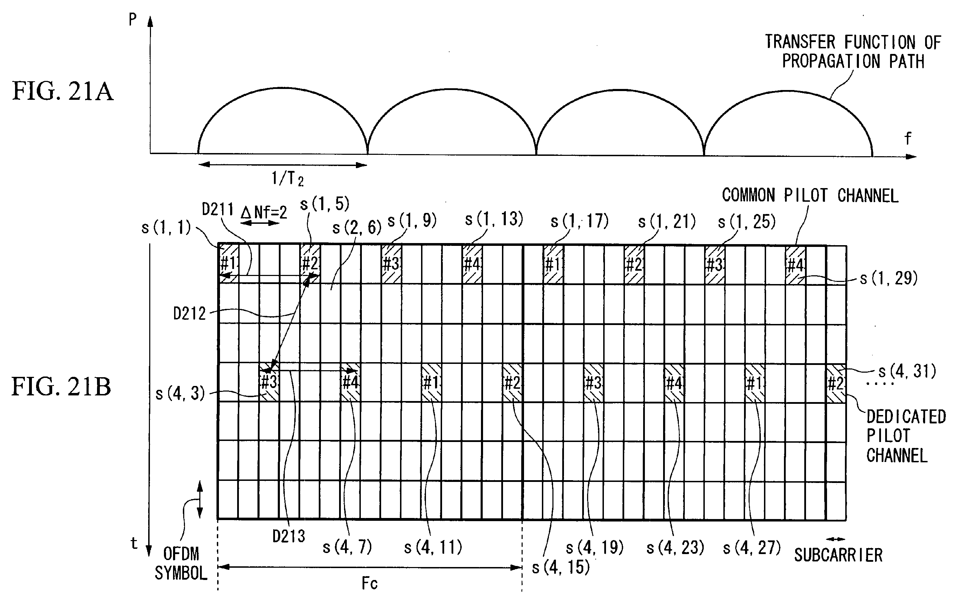

FIG. 21A shows the reception signal, with the horizontal axis representing frequency f and the vertical axis representing the electrical power p. FIG. 21B shows the constitution of a subcarrier that is transmitted from a transmitter to a receiver. The propagation path of FIG. 21A is the frequency-domain representation of the propagation path of FIG. 20B. As shown in FIG. 21B, since $\alpha$ = 1/Fc < T2, when performing transmission by giving the delay time $\tau$ = T2 to the transmission antenna 1 and the transmission antenna 2, the transmitter transmits a signal with dedicated pilot channels disposed at an OFDM signal of a different time between the common pilot channels that are disposed at the unit regions s(1, 1), s(1, 5), s(1, 9), s(1, 13), s(1, 17), s(1, 21), s(1, 25), s(1, 29), that is, at the unit regions s(4, 3), s(4, 7), s(4, 11), s(4, 15), s(4, 19), s(4, 23), s(4, 27), s(4, 31). The dedicated pilot channels are inserted between adjacent common pilot channels along different OFDM symbols in the frequent axis f direction, and the subcarrier interval ΔNf with the adjacent pilot channel is narrowed from ΔNf = 4 to ΔNf = 2. Also, the dedicated pilot channels are arranged in the time axis t direction on the fourth-line OFDM symbol (s(4, 1) to s(4, 31)) transmitted after the common pilot channels arranged on the first-line OFDM symbol (s(1, 1) to s(1, 31)).

Also, a sequence that 2-bit cyclic shifts the same OVSF code sequence as for the common pilot channels is multiplied by the aforementioned dedicated pilot channels. The #1 to #4 of FIG 21B indicate OVSF code sequences.

The receiver receives the signals disposed as shown in FIG. 21B from the transmitter through the propagation path of the delay profile shown in FIG. 20B by the reception antenna that it is equipped with. Note that the propagation path of FIG. 21A is one that expresses in the frequency-domain the propagation path of FIG. 20B.

On the reception side, reverse diffusion processing is performed by the OVSF code that is multiplied with respect to the common pilot channels that are inserted in the subcarriers of the reception signal and the propagation path is estimated.

For example, the propagation path estimation result of the unit region s(2, 6) of FIG. 21B is obtained from the result of performing reverse diffusion processing in the common pilot channels #1 to #4 that are connected by the arrows D211 to D213 in FIG. 21B. Alternatively, it is possible to adopt the amplitude (or received power) and phase of the subcarriers in which the pilot channels of the received signal are arranged as one that shows the propagation path value. However, in the receiver, the pilot channel arrangement, the pilot channels, the OVSF code to be multiplied, and the pilot number used for calculating the propagation path value are known.

As given above, in a transmitter that applies CDTD, with respect to a threshold value $\alpha$ that switches the pilot arrangement determined by the method of the radio transmission system, in the case of making the inter-antenna delay time $\tau$ smaller than the threshold value $\alpha$, it inserts pilot channels at an arrangement that is determined in advance by a method of the system or the like, and in the case where the inter-antenna delay time $\tau$ is greater than the threshold value $\alpha$, it interpolates the pilot channels by dedicated pilot channels at an arrangement that is determined in advance by a method of the system or the like. Thereby, it is possible to reduce the difference of frequency fluctuations between common pilot channels that are used in propagation path estimation, and so propagation path estimation of a high degree of accuracy becomes possible.

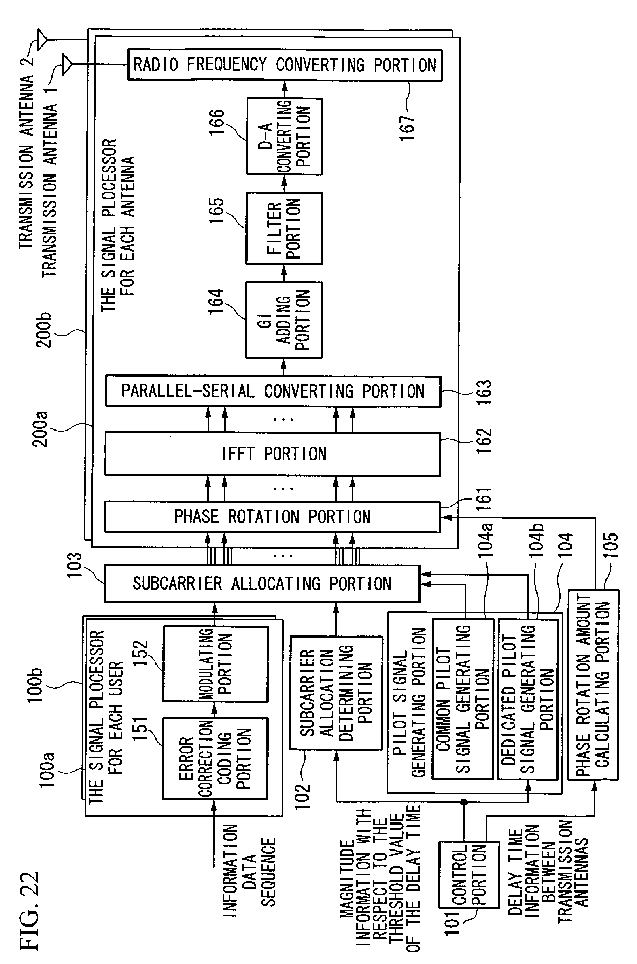

FIG. 22 is a block diagram that shows the constitution of the transmitter according to the third embodiment of the present invention. The transmitter according to the present embodiment has a control portion 101 that outputs magnitude information with respect to the threshold value of the delay time between transmission antennas and delay time information between the transmission antennas. Also, it has a subcarrier allocation determining portion 102 that determines the subcarrier insertion arrangement of dedicated pilot channels by the magnitude information with respect to the threshold value of the delay time between transmission antennas that is reported from the control portion 101 and determines the allocation to each subcarrier of the common pilot channels and the output of signal processors for each user 100a, 100b. Also, it has a pilot signal generating portion 104 that generates common pilot channels and dedicated pilot channels that multiply the OVSF code sequence and input them to a subcarrier allocating portion 102. Also, it has a phase rotation amount calculating portion 105 that calculates the phase rotation amount of each subcarrier by delay time information between transmission antennas from the control portion 101. Also, it has a subcarrier allocating portion 103 that allocates to each subcarrier the output of the signal processors for each user 100a, 100b and the output of the pilot signal generating portion 104 based on the subcarrier allocation information in the subcarrier allocation determining portion 102. Also, it has signal processors for each antenna 200a, 200b that perform signal processing of each transmission antenna. Note that the pilot signal generating portion 104 has a dedicated pilot signal generating portion 104b that generates dedicated pilot channel signals of a pattern that is determined by the magnitude information with respect to the threshold value of the delay time between transmission antennas that is output from the control portion and a common pilot signal generating portion 104a that generates common pilot channel signals of a pattern that is determined in advance by the method of the system.

The other constitutions are the same as the constitution of the transmitter according to the first embodiment (FIG. 7), and so will be identified by the same reference numerals with descriptions thereof omitted.

As described above, in the case of the inter-transmission antenna delay time $\tau$ being greater than the threshold value $\alpha$ that is determined in advance by the transmitter, it interpolates between the common pilot channels with the dedicated pilot channels, thereby increasing the number of pilot channels per band. It is also possible, however, to increase the number of pilot channels per transmission signal band with the method that reduces the interval between common pilot channels described in the first embodiment. It is also possible to increase the number of pilot channels per transmission signal band by combining the method that reduces the interval between common pilot channels described in the first embodiment with a method that interpolates between the common pilot channels with dedicated pilot channels.

In the above-described third embodiment, in the case where the delay amount of the delay transmit diversity is greater than the predetermined threshold value $\alpha$, the number of pilot channels per transmission signal band becomes greater with the subcarrier allocating portion 103. Thereby, it is possible to enhance the propagation path estimation accuracy, during use of an effective frequency diversity in the case of the delay amount of the delay transmit diversity being large.

For example, it is possible to use the inverse number 1/Fc of the chunk frequency band as the predetermined threshold value $\alpha$, or use the inverse number 1/Fu of the user occupied frequency band. Also, it is possible to perform CDTD favorably.

Fourth Embodiment

A fourth embodiment is directed to a method of interpolating dedicated pilot channels to pilot channels that are prearranged as one example in the case of, in CDTD, adaptively changing the pilot channel interval by a delay time that is given between transmission antennas.

The description will be given for the case of as shown in FIG. 1 the transmitter transmitting a signal with its two transmission antennas, and the receiver receiving signals with its one reception antenna.

The transmitter transmits by giving the delay time $\tau$ between the transmission antenna 1 and the transmission antenna 2. In this case, the frequency fluctuation pitch of the combined wave of the transmission antenna 1 and the transmission antenna 2 that the receiver receives is $1/\tau$. In the present embodiment, it interpolates dedicated pilot channels to pilot channels that are prearranged so that as one example the frequency bandwidth Fc that is used for calculation of the aforementioned propagation path estimation information is Fc < $1/\tau$. Hereinbelow, the specific content of the fourth embodiment will be described.

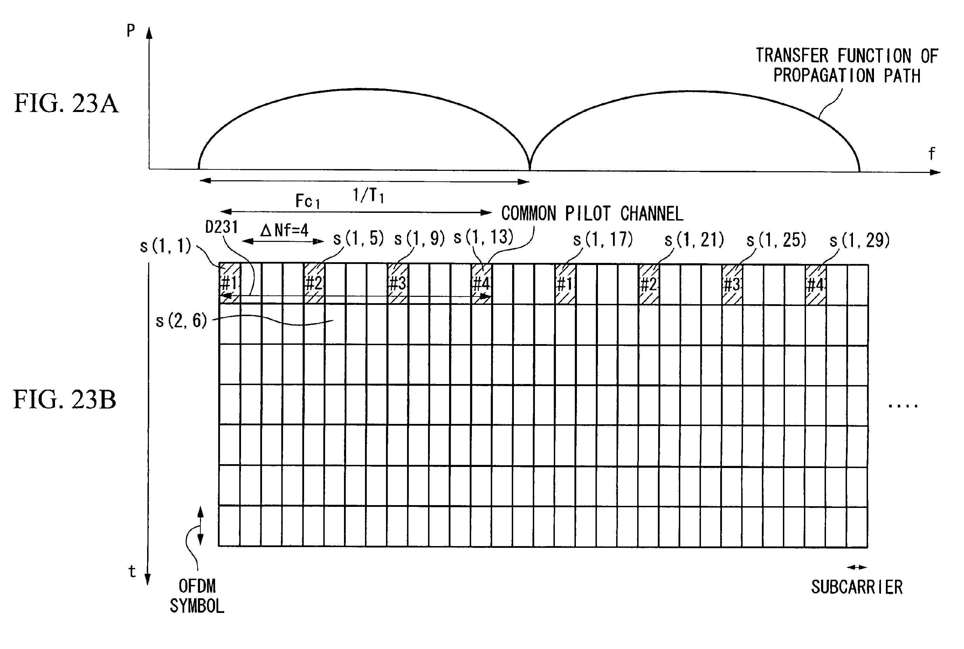

First, in the transmitter that applies CDTD, the arrangement of pilot channels is determined in advance by the method of the system or the like. As an example, the case of the prearranged pilot channels being the common pilot channels as shown in FIG. 23B will be explained. Note in FIG. 23A shows a received signal, represented by the frequency axis f on the horizontal axis and the power axis p on the vertical axis.

As shown in FIG. 23A, the common pilot channels are arranged on the unit regions s(1, 1), s(1, 5), s(1, 9), s(1, 13), s(1, 17), s(1, 21), s(1, 25), s(1, 29). They are arranged on the same OFDM symbol at an interval of the subcarrier interval $\Delta$Nf = 4 in the frequency axis f direction. Also, the OVSF code of code length SF = 4 is multiplied by the common pilot channels along the frequency axis f direction. In FIG. 23B, #1 to #4 indicate the constituent elements of the OVSF code sequence, similarly to the first embodiment.

In the arrangement of the pilot channels shown in FIG. 23B, for example, in the case of estimating the propagation path of unit region s(2, 6), it is calculated by the four common pilot channels connected by the arrow D231 in FIG. 23B. The Fc1 section of FIG. 23B is the frequency bandwidth that is used for calculation of the propagation path estimation information, and Fc = Fc1.

On the reception side that receives signals of the arrangement shown in FIG. 23B, reverse diffusion processing is performed by the OVSF code that is multiplied with respect to the common pilot channels that are inserted in the subcarriers of the reception signal and the propagation path is estimated.

For example, the propagation path estimation result of the unit region s(2, 6) of FIG. 23B is obtained from the result of performing reverse diffusion processing in the common pilot channels #1 to #4 that are connected by the arrow D231 in FIG. 23B. Alternatively, it is possible to adopt the amplitude (or received power) and phase of the subcarriers in which the pilot channels of the received signal are arranged as one that shows the propagation path value. However, in the receiver, the pilot channel arrangement, the pilot channels, the OVSF code to be multiplied, and the pilot number used for calculating the propagation path value are known.

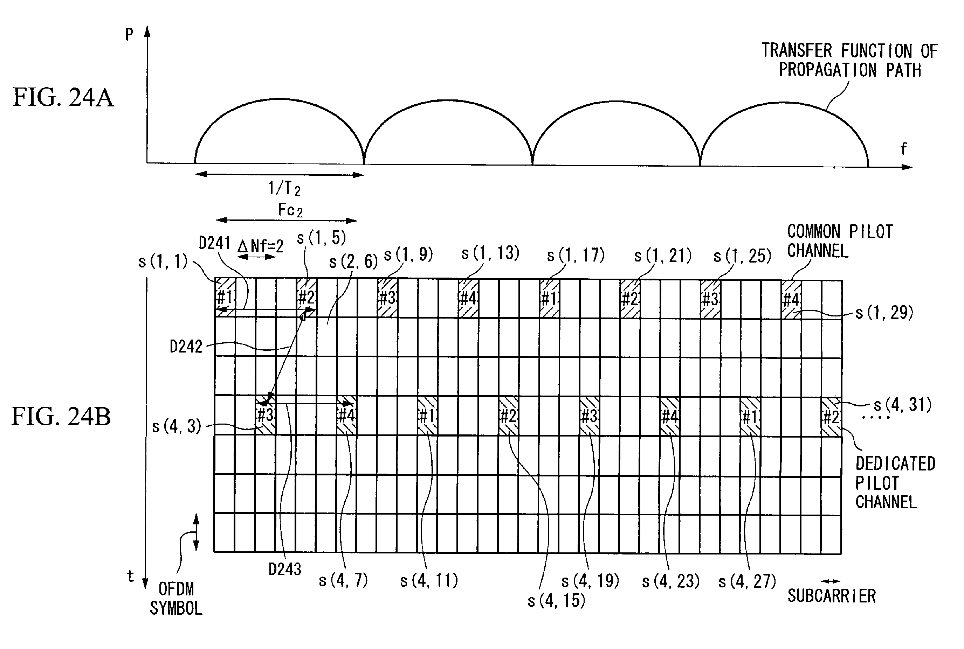

Also, as the pilot channel arrangement pattern, the transmitter holds the pilot channel arrangement pattern shown in FIG 24B that makes the subcarrier interval $\Delta$Nf=2 in the frequency axis direction by interpolating the pilot arrangement of FIG. 23B with dedicated pilot channels. Note that FIG. 24A shows the reception signal, with the horizontal axis representing frequency f and the vertical axis representing the electrical power p.

In FIG. 24B, the common pilot channels are arranged at the unit regions s(1, 1), s(1, 5), s(1, 9), s(1, 13), s(1, 17), s(1, 21), s(1, 25), s(1, 29). Also, dedicated pilot channels are arranged at the unit regions s(4, 3), s(4, 7), s(4, 11), s(4, 15), s(4, 19), s(4, 23), s(4, 27), s(4, 31). Fc2 of FIG. 24B is the frequency bandwidth that is used for calculation of the propagation path estimation information in each pilot arrangement.

The #1 to #4 in FIG. 24B indicate constituent elements of the OVSF code sequence to be multiplied by the common pilot channels and the dedicated pilot channels, and multiply the sequence that cyclic shifts the OVSF code sequence that is multiplied by the common pilot channels by the dedicated pilot channels by the dedicated pilot channels. In FIG. 24B, a sequence that 2-bit cyclic shifts the OVSF code sequence that is multiplied by the common pilot channels is multiplied.

On the reception side that receives signals of the arrangement shown in FIG. 24B, reverse diffusion processing is performed by the OVSF code that is multiplied with respect to the common pilot channels and dedicated pilot channels that are inserted in the subcarriers of the reception signal and the propagation path is estimated.

For example, the propagation path estimation result of the unit region s(2, 6) of FIG. 24B is obtained from the result of performing reverse diffusion processing in the common pilot channels #1 to #4 that are connected by the arrows D241 to D243. Alternatively, it is possible to adopt the amplitude (or received power) and phase of the subcarriers in which the pilot channels of the received signal are arranged as one that shows the propagation path value. However, in the receiver, the pilot channel arrangement, the pilot channels, the OVSF code to be multiplied, and the pilot number used for calculating the propagation path value are known.

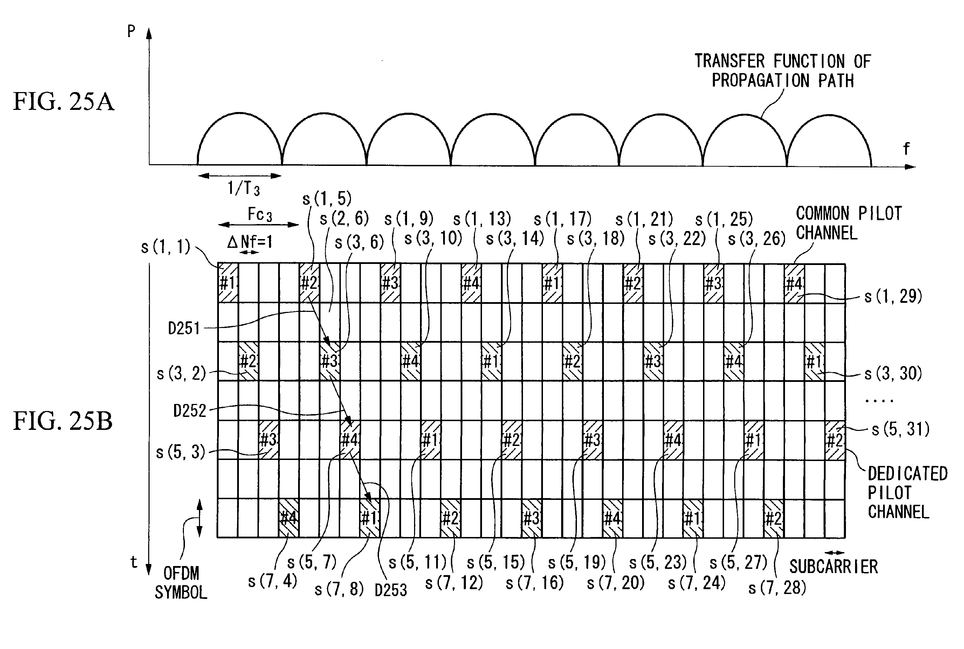

Also, as the pilot channel arrangement pattern, the transmitter can be made to hold the pilot channel arrangement pattern shown in FIG. 25B that makes the subcarrier interval ΔNf=1 in the frequency axis direction by interpolating the pilot arrangement of FIG. 23B with dedicated pilot channels. Note that FIG. 25A shows the reception signal, with the horizontal axis representing frequency f and the vertical axis representing the electrical power p.

In FIG. 25B, the common pilot channels are arranged at the unit regions s(1, 1), s(1, 5), s(1, 9), s(1, 13), s(1, 17), s(1, 21), s(1, 25), s(1, 29).

Also, dedicated pilot channels are arranged at the unit regions s(3, 2), s(3, 6), s(3, 10), s(3, 14), s(3, 18), s(3, 22), s(3, 26), s(3, 30), s(5, 3), s(5, 7), s(5, 11), s(5, 15), s(5, 19), s(5, 23), s(5, 27), s(5, 31), s(7, 4), s(7, 8), s(7, 12), s(7, 16), s(7, 20), s(7, 24), s(7, 28). Fc2 in FIG. 24B and Fc3 in FIG. 25B are the frequency bandwidth that is used for calculation of the propagation path estimation information in each pilot arrangement. Note that Fc1 > Fc2 > Fc3.

The #1 to #4 in FIG. 25B indicate constituent elements of the OVSF code sequence to be multiplied by the common pilot channels and the dedicated pilot channels, and multiply the sequence that cyclic shifts the OVSF code sequence that is multiplied by the common pilot channels by the dedicated pilot channels by the dedicated pilot channels. In FIG. 25B, the sequence that is 1-bit cyclic shifted from the OVSF code sequence that is multiplied by the common pilot channels is multiplied by the dedicated pilot channels that are arranged in the third-line OFDM symbol (s(3, 1) to s(3, 31)). Also, the sequence that is 2-bit cyclic shifted from the OVSF code sequence that is multiplied by the common pilot channels is multiplied by the dedicated pilot channels that are arranged in the fifth-line OFDM symbol (s(5, 1) to s(5, 31)). Also, the sequence that is 3-bit cyclic shifted from the OVSF code sequence that is multiplied by the common pilot channels is multiplied by the dedicated pilot channels that are arranged in the seventh-line OFDM symbol (s(7, 1) to s(7, 31)). Note that the mth-line OFDM symbol (where m is an integer of 1 or more) indicates an OFDM symbol that includes the unit regions s(m, 1), s(m, 2), s(m, 3),....

On the reception side that receives signals of the arrangement shown in FIG. 25B, reverse diffusion processing is performed by the OVSF code that is multiplied with respect to the common pilot channels and dedicated pilot channels that are inserted in the subcarriers of the reception signal and the propagation path is estimated.

For example, the propagation path estimation result of the unit region s(2, 6) of FIG. 25B is obtained from the result of performing reverse diffusion processing in the common pilot channels #1 to #4 that are connected by the arrows D251 to D253. Alternatively, it is possible to adopt the amplitude (or received power) and phase of the subcarriers in which the pilot channels of the received signal are arranged as one that shows the propagation path value. However, in the receiver, the pilot channel arrangement, the pilot channels, the OVSF code to be multiplied, and the pilot number used for calculating the propagation path value are known.

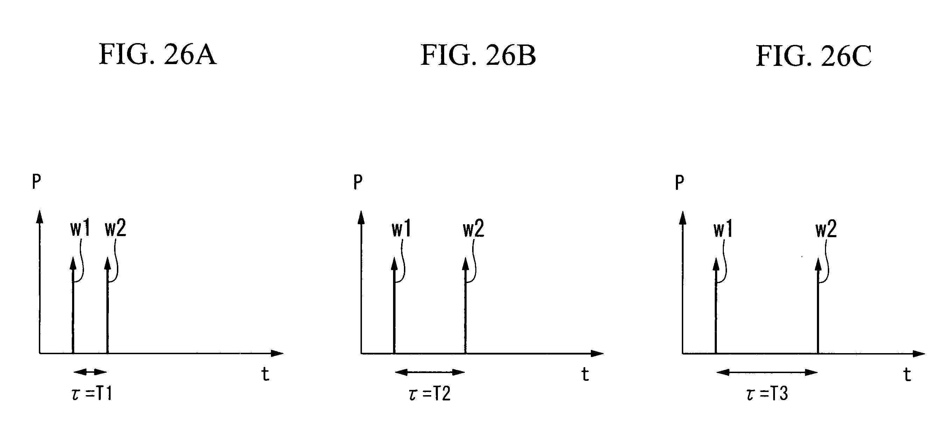

The transmitter performs transmission by imparting the delay time τ = T1 between the transmission antennas. FIG. 26A shows the delay profile in which the propagation path is expressed in the time domain when a delay of τ = T1 is given. The propagation path of FIG. 23A is a frequency representation of the delay profile of FIG. 26A. w1 shows the arrival wave of the signal that is transmitted from the transmission antenna 1 (FIG. 1), and w2 shows the arrival wave of the signal that is transmitted from the transmission antenna 2 (FIG. 1). The frequency fluctuation pitch of the propagation path of FIG. 23A becomes 1/T1, and since 1/T1 > Fc1 > Fc2 > Fc3, the transmitter transmits a signal with the pilot arrangement shown in FIG. 23B.

Next, the aforementioned transmitter performs transmission by imparting the delay time τ = T2 between the transmission antennas. FIG. 26B shows the delay profile in which the propagation path is expressed in the time domain when a delay of τ = T2 is given. The propagation path of FIG. 24A is a frequency representation of the delay profile of FIG. 26B. w1 shows the arrival wave of the signal that is transmitted from the transmission antenna 1 (FIG. 1), and w2 shows the arrival wave of the signal that is transmitted from the transmission antenna 2 (FIG. 1). The frequency fluctuation pitch of the propagation path of FIG. 24A becomes 1/T2, and since Fc1 > 1/T2 > Fc2 > Fc3, the transmitter transmits a signal with the pilot arrangement shown in FIG. 24B.

Next, the aforementioned transmitter performs transmission by imparting the delay time τ = T3 between the transmission antennas. FIG. 26C shows the delay profile in which the propagation path is expressed in the time domain when a delay of τ = T3 is given. The propagation path of FIG. 25A is a frequency representation of the delay profile of FIG. 26C. A reference character w1 shows the arrival wave of the signal that is transmitted from the transmission antenna 1 (FIG. 1), and w2 shows the arrival wave of the signal that is transmitted from the transmission antenna 2 (FIG. 1). The frequency fluctuation pitch of the propagation path of FIG. 25A becomes 1/T3, and since Fc1 > Fc2 > 1/T2 > Fc3, the transmitter transmits a signal with the pilot arrangement shown in FIG. 25B.

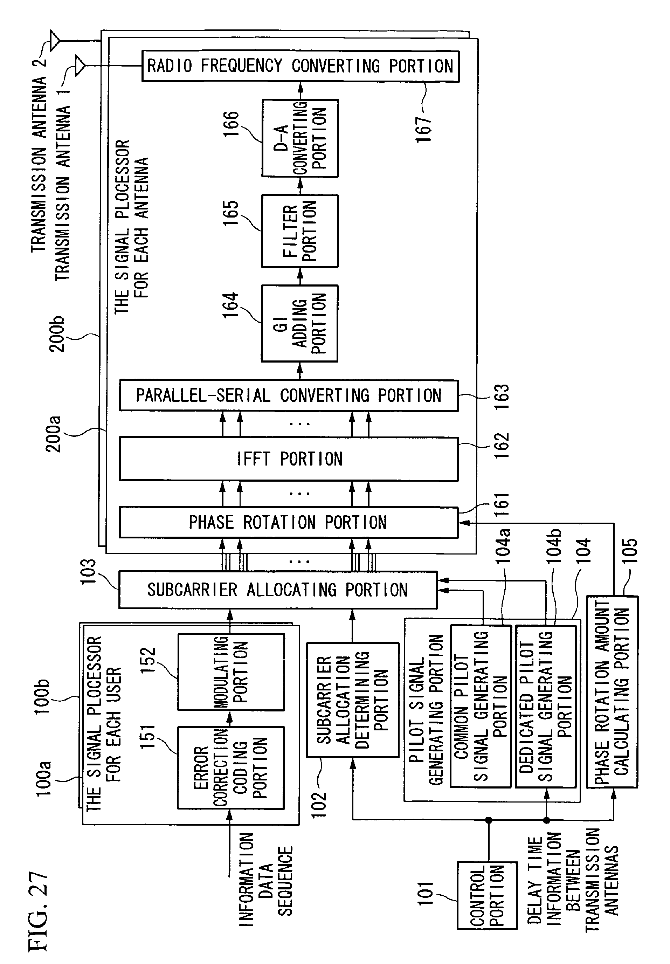

FIG. 27 is a block diagram that shows the constitution of the transmitter according to the fourth embodiment of the present invention. The transmitter according to the present embodiment has a control portion 101 that outputs delay time information between the transmission antennas. Also, it has a subcarrier allocation determining portion 102 that determines the subcarrier insertion arrangement of dedicated pilot channels by the delay time information between the transmission antennas that is reported from the control portion 101 and determines the allocation to each subcarrier of the common pilot channels and the output of signal processors for each user 100a, 100b. Also, it has a pilot signal generating portion 104 that generates common pilot channels and dedicated pilot channels that multiply the OVSF code sequence and input them to a subcarrier allocating portion 103. Also, it has a phase rotation amount calculating portion 105 that calculates the phase rotation amount of each subcarrier by delay time information between transmission antennas from the control portion 101. Also, it has a subcarrier allocating portion 103 that allocates to each subcarrier the output of the signal processors for each user 100a, 100b and the output of the pilot signal generating portion 104 based on the subcarrier allocation information in the subcarrier allocation determining portion 102. Note that the pilot signal generating portion 104 has a dedicated pilot signal generating portion 104b that generates dedicated pilot channel signals of a pattern that is determined by the delay time information between transmission antennas that is output from the control portion 101 and a common pilot signal generating portion 104a that generates common pilot channel signals of a pattern that is determined in advance by the method of the system.

The other constitutions are the same as the constitution of the transmitter according to the first embodiment (FIG. 7), and so will be identified by the same reference numerals with descriptions thereof omitted.

As described above, in the transmitter that applies CDTD, it possible to reduce the difference in frequency fluctuation of each pilot channel used in propagation path estimation, by performing transmission by switching to the pilot arrangement pattern in which the frequency bandwidth Fc that is used in the calculation of the propagation path estimation information becomes small with respect to the delay time $\tau$ that is given between the transmission antennas. It is therefore possible to perform highly accurate propagation path estimation.

The present embodiment reduces the frequency bandwidth Fc that is used in the calculation of the propagation path estimation information with a pattern that interpolates the common pilot channels with dedicated pilot channels. It is also possible, however, to reduce the frequency bandwidth Fc that is used in the calculation of the propagation path estimation information with the method that reduces the interval between common pilot channels described in the first embodiment. It is also possible to reduce the frequency bandwidth Fc by combining the method that reduces the interval between common pilot channels described in the first embodiment with a method that interpolates between the common pilot channels with dedicated pilot channels.

The fourth embodiment described above monotonically increases the number of pilot channels per transmission signal band with increases in the delay transmit diversity delay amount by the subcarrier allocating portion 103. Thereby, it is possible to prevent from decreasing in the number of pilot channels per transmission signal band even when the delay amount increases, and possible to enhance the propagation path estimation accuracy.

Also, the fourth embodiment described above can be set so that the inverse of the transmission antenna delay time becomes greater than the frequency bandwidth assigned with the pilot channels by which the series of orthogonal codes #1 to #4 for estimating the propagation path are multiplied by the subcarrier allocating portion 103.

Also, in the fourth embodiment described above, the subcarrier allocating portion 103 can be set so as to change the number of pilot channels per transmission signal band by changing the arrangement interval of common channels.

Also, the fourth embodiment described above multiplies the code sequence for keeping the orthogonality along the common pilot channels and dedicated pilot channels (for example, the sequence that cyclic shifts the OVSF code that is multiplied by common pilot channels) by the dedicated pilot channels that interpolate the pilot channels that are prearranged with the pilot signal generating portion 104. Thereby, it is possible to prevent interference by these pilot channels, and it is possible to increase the propagation path estimation accuracy between the transmitter and the receiver, since the dedicated pilot channels and common pilot channels are transmitted in the state of orthogonality being maintained. Also, it is possible to favorably perform CDTD.

High-accuracy propagation path estimation is possible without affecting the frequency selectivity while effectively obtaining a frequency diversity effect that is an advantage in multicarrier transmission by performing delay transmit diversity such as DTD, CDTD in multicarrier transmission such as OFDM, according to the transmitter described in the first to fourth embodiments above,.

Note that in the embodiments described above, control of the transmitter may be performed by recording on a computer-readable recording medium a program for realizing the functions of or some of the functions of the control portion 101, the subcarrier allocation determining portion 102, the subcarrier allocating portion 103, the pilot signal generating portion 104, the phase rotation amount calculating portion 105, the error correction coding portion 151, the modulating portion 152, the phase rotation portion 161, the IFFT portion 162, the serial-parallel converting portion 163, the GI adding portion 164, the filter portion 165, the D-A converting portion 166, and the radio frequency converting portion 167, reading the program that is recorded on the recording medium into a computer system, and executing it. Note that "computer system" here refers to one that includes an operating system and hardware such as peripheral equipment.

Also, a "computer-readable recording medium" refers to a portable medium such as a flexible disk, magneto-optical disk, ROM, CD-ROM and the like, and a storage device such as a hard disk that is housed in a computer system. The "computer readable storage medium" also includes one for holding the program for a certain time, such as a volatile memory in a computer system which functions as a server or client for receiving the program sent via a network (e.g., the Internet) or a communication line (e.g., a telephone line). Also, the program may be one for realizing a portion of the abovementioned functions, and it is also possible to realize the abovementioned functions in combination with a program that has already been stored in the computer system.

While preferred embodiments of the invention have been described and illustrated above, specific constitutions are not limited to these embodiments, and designs are also included with a scope that do not depart from the spirit or scope of the present invention.

INDUSTRIAL APPLICABILITY

The present invention can be applied to a transmitter that transmits signals from a plurality of transmission antennas, and can change the propagation path estimation accuracy by changing the number of pilot channels per transmission signal band in accordance with whether or not delay transmit diversity is performed.

**Claims**

1. A transmitter that transmits a signal from a plurality of transmission antennas, comprising:

   a subcarrier allocating portion which changes a number of pilot channels per transmission signal bandwidth depending on whether or not a delay transmission diversity that transmits the signal by giving a delay between the plurality of transmission antennas is performed.

2. The transmitter according to claim 1, wherein the subcarrier allocating portion arranges more numbers of pilot channels per transmission signal bandwidth, in the case of performing delay transmit diversity, than in the case of not performing delay transmit diversity.

3. The transmitter according to claim 1, wherein the subcarrier allocating portion arranges more numbers of pilot channels per transmission signal band, in the case where a delay amount of the delay transmit diversity is greater than a predetermined threshold value.

4. The transmitter according to claim 3, wherein the predetermined threshold value is an inverse of a frequency bandwidth of a region that is defined by a predetermined time length and a predetermined frequency bandwidth.

5. The transmitter according to claim 3, wherein the predetermined threshold value is an inverse of a user occupied frequency bandwidth.

6. The transmitter according to claim 1, wherein the subcarrier allocating portion increases the number of pilot channels per transmission signal bandwidth as a delay amount of the delay transmit diversity increases.

7. The transmitter according to claim 1, wherein the subcarrier allocating portion arranges pilot channels such that the inverse of a transmission antenna delay time becomes greater than a frequency bandwidth in which the pilot channel multiplied a series of orthogonal codes for estimating a propagation path are arranged.

8. The transmitter according to claim 1, wherein the subcarrier allocating portion changes the number of pilot channels per transmission signal bandwidth by changing the arrangement interval of common pilot channels invariably inserted in the transmission signal band.

9. The transmitter according to claim 1, wherein the subcarrier allocating portion changes the number of pilot channels per transmission signal bandwidth by interpolating dedicated pilot channels that are temporarily arranged to pilot channels that are arranged in advance.

10. The transmitter according to claim 9, further comprising a pilot signal generating portion which multiplies a code sequence for maintaining orthogonality along a common pilot channel and the dedicated pilot channel by the dedicated pilot channel that interpolates the pilot channel arranged in advance.

11. The transmitter according to claim 10, wherein the pilot signal generating portion multiplies a sequence in which an OVSF code that is multiplied by the common pilot channel is shifted by a cyclic shift, by the dedicated pilot channel.

12. The transmitter according to claim 1, wherein the subcarrier allocating portion increases a number of pilot channels that give a delay in accordance with a delay amount that is given between the plurality of transmission antennas.

**13.** The transmitter according to claim 12, wherein the subcarrier allocating portion adds the delay in accordance with the delay amount that is given between the plurality of transmission antennas, to a pilot channel that is arranged regardless of whether or not the delay transmit diversity is performed.

**14.** The transmitter according to claim 13, wherein the pilot channel that is arranged regardless of whether or not the delay transmit diversity is performed is a common pilot channel that is invariably inserted in the transmission signal band.

**15.** The transmitter according to claim 13, wherein the pilot channel that is arranged regardless of whether or not the delay transmit diversity is performed includes of a common pilot channel that is invariably inserted in the transmission signal band and a dedicated pilot channel that is temporarily arranged.

**16.** The transmitter according to claim 13, wherein the subcarrier allocating portion inserts a dedicated pilot channel that is temporarily arranged to the pilot channel that is arranged regardless of whether or not the delay transmit diversity is performed.

**17.** A transmitter that transmits a signal from a plurality of transmission antennas, comprising:

a subcarrier allocating portion which gives a delay to a dedicated pilot channel in the case of performing a delay transmit diversity that transmits signals giving a delay between the plurality of transmission antennas.

**18.** The transmitter according to claim 17, wherein the subcarrier allocating portion further adds a delay to a common pilot channel in the case of performing a delay transmit diversity that transmits signals giving a delay between the plurality of transmission antennas.

**19.** A transmission method for transmitting a signal from a plurality of transmission antennas, comprising the step of:

changing a number of pilot channels per transmission signal bandwidth depending on whether or not a delay transmission diversity that transmits the signal by giving a delay between the plurality of transmission antennas is performed.

# FIG. 1

FIG. 2A

P

w1

t1       t

FIG. 2B

P

w2

t2       t

FIG. 2C

P

w1

w2

t1   t2      t

FIG. 2D

P

w1    w2

t1     t3 (=t2+$\tau$)    t

EP 1 968 209 A1

FIG. 3A

FIG. 3B

FIG. 4A

FIG. 4B

FIG. 5A

$P$

TRANSFER FUNCTION OF
PROPAGATION PATH

$1/t_2$

$f$

FIG. 5B

D51 $\quad \Delta Nf=4$

s(1, 1) $\quad$ s(1, 9) $\quad$ D52 $\quad$ s(1, 17) $\quad$ s(1, 25) COMMON PILOT CHANNEL

#1 $\quad$ #2 $\quad$ #3 $\quad$ #4

s(2, 6)

#3 $\quad$ #4 $\quad$ #1 $\quad$ #2

s(5, 29)

$t$

OFDM SYMBOL $\quad$ s(5, 5) $\quad$ D53 $\quad$ s(5, 13) $\quad$ s(5, 21) $\quad$ SUBCARRIER

FIG. 6A

P

TRANSFER FUNCTION OF
PROPAGATION PATH

$1/t_3$

f

FIG. 6B

D61 △Nf=2  s(1, 5)

s(1, 1)   s(2, 6)  s(1, 9)  s(1, 13)  s(1, 17)  s(1, 21)  s(1, 25)  COMMON PILOT CHANNEL

#1  #2  #3  #4  #1  #2  #3  #4  s(1, 29)

D62

D63

s(5, 3)  #3  #4  #1  #2  #3  #4  #1  #2  s(5, 31)

t

OFDM SYMBOL   s(5, 7)  s(5, 11)  s(5, 15)  s(5, 19)  s(5, 23)  s(5, 27)  SUBCARRIER

EP 1 968 209 A1

27

FIG. 7

EP 1 968 209 A1

FIG. 8

☑ COMMON PILOT CHANNEL
⊞ COMMON CONTROL CHANNEL
⊠ DOWNLINK SYNCHRONIZATION CHANNEL
⊟ COMMON CONTROL SIGNALING CHANNEL
☐ COMMON DATA CHANNEL

EP 1 968 209 A1

FIG. 9A

$P$

TRANSFER FUNCTION OF
PROPAGATION PATH

$f$

$1/t_3$

FIG. 9B

$s(1,3)$  $\triangle Nf=2$  $D91$  $s(1,5)$  $s(1,9)$  $s(1,13)$  $s(1,17)$  $s(1,21)$  $s(1,25)$

$s(1,1)$  $s(1,7)$  $s(1,11)$  $s(1,15)$  $s(1,19)$  $s(1,23)$  $s(1,27)$

COMMON PILOT
CHANNEL

DEDICATED
PILOT
CHANNEL

#1  #3  #2  #4  #3  #1  #4  #2  #1  #3  #2  #4  #3  #1  #4  #2

$s(2,6)$

$s(1,31)$

$s(1,29)$

....

$t$

OFDM SYMBOL

SUBCARRIER

EP 1 968 209 A1

FIG. 10A

TRANSFER FUNCTION OF PROPAGATION PATH

FIG. 10B

COMMON PILOT CHANNEL

DEDICATED PILOT CHANNEL

SUBCARRIER

OFDM SYMBOL

FIG. 11A

P

TRANSFER FUNCTION OF PROPAGATION PATH

$1/t_2$

f

FIG. 11B

$\triangle Nf=2$

s(1, 1)

s(2, 6)   s(1, 9)   s(3, 11)   s(1, 17)   s(3, 19)   s(1, 25)   COMMON PILOT CHANNEL

#1   #2   #3   #4

D111

DEDICATED PILOT CHANNEL

s(3, 3)   #2   #3   #4   #1   s(3, 27)

D112

. . . .

s(5, 5)   #3   #4   #1   #2   s(5, 29)

#4   #1   #2   #3   s(7, 31)

t   OFDM SYMBOL

D113   s(7, 7)   s(5, 13)   s(7, 15)   s(5, 21)   s(7, 23)   SUBCARRIER

32

FIG. 12

EP 1 968 209 A1

FIG. 13

☑ COMMON PILOT CHANNEL
◩ DEDICATED PILOT CHANNEL
⊞ COMMON CONTROL CHANNEL
⊠ DOWNLINK SYNCHRONIZATION CHANNEL
⊟ COMMON CONTROL SIGNALING CHANNEL
☐ COMMON DATA CHANNEL

EP 1 968 209 A1

# FIG. 14

FIG. 15A

FIG. 15B

FIG. 15C

RECEIVER 1

RECEIVER 2

RECEIVER 3

COMMON PILOT CHANNEL

D151

DEDICATED PILOT CHANNEL

ORTHOGONAL

ORTHOGONAL

1  1  1  1  1  1  1  1  1  1  1  1  1  1  1  1

1  -1  1  -1  -1  1  -1  1  1  -1  1  -1  -1  1  -1  1

1  1  -1  -1  1  1  -1  -1  1  1  -1  -1  1  1  -1  -1

f

f

f

EP 1 968 209 A1

## FIG. 16A

## FIG. 16B

# FIG. 17

CHUNK

. . . . .

Fc

. . . . .

. . . . .

BW

. . . . .

. . . . .

TTI

[////] COMMON PILOT CHANNEL

[XXXX] COMMON CONTROL SIGNALING CHANNEL

[    ] COMMON DATA CHANNEL

{ [:::::] USER 1

[:::::] USER 2

[:::::] USER 3

# FIG. 18

CHUNK

. . . . .

. . . . .

Fc

Fu

. . . . .

BW

. . . . .

⋮   ⋮

. . . . .

TTI

▨ COMMON PILOT CHANNEL

▩ COMMON CONTROL SIGNALING CHANNEL ⎰ ▢ USER 1

▢ COMMON DATA CHANNEL ⎱ ▢ USER 2

⎱ ▢ USER 3

FIG. 19A

TRANSFER FUNCTION OF PROPAGATION PATH

$1/T_1$

FIG. 19B

$s(1,1)$  D191  $\Delta Nf=4$  $s(1,5)$  $s(1,9)$  $s(1,13)$  COMMON PILOT CHANNEL  $s(1,17)$  $s(1,21)$  $s(1,25)$  $s(1,29)$

#1  #2  #3  #4  #1  #2  #3  #4

$s(2,6)$

OFDM SYMBOL

$F_c$

SUBCARRIER

EP 1 968 209 A1

FIG. 20A          FIG. 20B

P

w1  w2

$\tau = T1 < \alpha$

P

w1      w2

$\tau = T2 > \alpha$

FIG. 21A

P

TRANSFER FUNCTION OF
PROPAGATION PATH

1/T₂

f

FIG. 21B

COMMON PILOT CHANNEL

D211 ΔNf=2  s(1,5)  s(2,6) s(1,9)  s(1,13)  s(1,17)  s(1,21)  s(1,25)

s(1,1)

D212

#1    #2    #3    #4    #1    #2    #3    #4

s(1,29)

s(4,3)

#3    #4    #1    #2    #3    #4    #1    #2    s(4,31)
. . . .

DEDICATED
PILOT
CHANNEL

t

OFDM
SYMBOL

D213  s(4,7)  s(4,11)    s(4,19)  s(4,23)  s(4,27)  SUBCARRIER

s(4,15)

Fc

EP 1 968 209 A1

FIG. 22

FIG. 23A

P

TRANSFER FUNCTION OF
PROPAGATION PATH

f

$Fc_1$     $1/T_1$

COMMON PILOT CHANNEL

FIG. 23B

D231   $\Delta Nf=4$   s(1,5)  s(1,9)  s(1,13)     s(1,17)     s(1,21)     s(1,25)     s(1,29)

s(1,1)

#1   #2   #3   #4   #1   #2   #3   #4

s(2,6)

t

OFDM
SYMBOL

SUBCARRIER

....

EP 1 968 209 A1

FIG. 24A

FIG. 24B

TRANSFER FUNCTION OF PROPAGATION PATH

COMMON PILOT CHANNEL

DEDICATED PILOT CHANNEL

OFDM SYMBOL

SUBCARRIER

EP 1 968 209 A1

FIG. 25A

FIG. 25B

TRANSFER FUNCTION OF PROPAGATION PATH

COMMON PILOT CHANNEL

DEDICATED PILOT CHANNEL

OFDM SYMBOL

SUBCARRIER

EP 1 968 209 A1

FIG. 26A

FIG. 26B

FIG. 26C

EP 1 968 209 A1

FIG. 27

TRANSMISSION ANTENNA 2
TRANSMISSION ANTENNA 1

200b
200a

THE SIGNAL PROCESSOR FOR EACH ANTENNA

RADIO FREQUENCY CONVERTING PORTION — 167

164 GI ADDING PORTION
165 FILTER PORTION
166 D-A CONVERTING PORTION

PARALLEL-SERIAL CONVERTING PORTION — 163

IFFT PORTION — 162

PHASE ROTATION PORTION — 161

103 SUBCARRIER ALLOCATING PORTION

100a 100b THE SIGNAL PROCESSOR FOR EACH USER

151 ERROR CORRECTION CODING PORTION
152 MODULATING PORTION

INFORMATION DATA SEQUENCE

102 SUBCARRIER ALLOCATION DETERMINING PORTION

104a 104b 104 PILOT SIGNAL GENERATING PORTION
COMMON PILOT SIGNAL GENERATING PORTION
DEDICATED PILOT SIGNAL GENERATING PORTION

105 PHASE ROTATION AMOUNT CALCULATING PORTION

101 CONTROL PORTION

DELAY TIME INFORMATION BETWEEN TRANSMISSION ANTENNAS

FIG. 28A

FIG. 28B

FIG. 29A

FIG. 29B

FIG. 30A

FIG. 30B

FIG. 31A

FIG. 31B

FIG. 32

FIG. 33

FIG. 34A

P

TRANSFER FUNCTION OF
PROPAGATION PATH

f

ΔNf=4

FIG. 34B

PILOT
CHANNEL

OFDM SYMBOL

SUBCARRIER

t

## INTERNATIONAL SEARCH REPORT

| International application No. |
|---|
| PCT/JP2006/321739 |

A. CLASSIFICATION OF SUBJECT MATTER
*H04B7/06*(2006.01)i, *H04B1/707*(2006.01)i, *H04B7/02*(2006.01)i, *H04B7/26*
(2006.01)i, *H04J11/00*(2006.01)i

According to International Patent Classification (IPC) or to both national classification and IPC

B. FIELDS SEARCHED

Minimum documentation searched (classification system followed by classification symbols)
H04B7/06, H04B1/707, H04B7/02, H04B7/26, H04J11/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2004-530319 A (WAVECOM), 30 September, 2004 (30.09.04), Full text; all drawings & WO 2002/065685 A & EP 1358728 A & US 2004-0131110 A1 | 1-19 |
| A | JP 2002-9724 A (Nippon Hoso Kyokai), 11 January, 2002 (11.01.02), Full text; all drawings (Family: none) | 1-19 |
| A | JP 2005-124125 A (Nippon Hoso Kyokai), 12 May, 2005 (12.05.05), Full text; all drawings (Family: none) | 1-19 |

| ☒ Further documents are listed in the continuation of Box C. | ☐ See patent family annex. |
|---|---|

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 30 January, 2007 (30.01.07) | 06 February, 2007 (06.02.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

| International application No. |
|---|
| PCT/JP2006/321739 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2005-109743 A  (Toshiba Corp.), 21 April, 2005 (21.04.05), Full text; all drawings (Family: none) | 1-19 |
| A | JP 2003-244094 A  (Nippon Terekomu Kabushiki Kaisha), 29 August, 2003 (29.08.03), Full text; all drawings (Family: none) | 1-19 |
| A | Auer, G., Channel estimation for OFDM with cyclic delay diversity, Personal, Indoor and Mobile Radio Communications, 2004. PIMRC2004. 15th IEEE International Symposium on, Volume 3, Page(s):1792 - 1796, 5-8 Sept. 2004 | 1-19 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2005317268 A

### Non-patent literature cited in the description

- Application of Cyclic Delay Transmit Diversity to DS-CDMA using Frequency-domain Equalization. *IEICE Technical Report,* March 2005
- Common Pilot Channel Structure for OFDM Based Radio Access in Evolved UTRA Downlink. *3GPP, R1-050853*
- **KEIJI TACHIKAWA.** *W-CDMA Mobile Communication System,* ISBN 4-621-04894-5